# EUROPEAN PATENT APPLICATION

(11) **EP 4 301 025 A1**
(43) Date of publication of application: **03.01.2024**
(21) Application number: 22774000.8
(22) Date of filing: 01.03.2022
(51) Int. Cl.: H04W 24/02

(54) **DATA TRANSMISSION METHOD AND APPARATUS**

(30) Priority: 22.03.2021 CN 202110303321
(71) Applicant: Huawei Technologies Co., Ltd., Shenzhen, Guangdong 518129 (CN)
(72) Inventor: FAN, Qiang, Shenzhen, Guangdong 518129 (CN); XU, Xiaoying, Shenzhen, Guangdong 518129 (CN)
(74) Representative: Epping - Hermann - Fischer
(86) International application number: PCT/CN2022/078614
(87) International publication number: WO 2022/199338

(57) **Abstract**

Embodiments of this application provide a data transmission method and an apparatus. A first core network device obtains a transmission mode of a first service. The transmission mode of the first service is an acknowledged mode or an unacknowledged mode. The first core network device indicates a transmission mode of a first QoS flow to an access network device. The first QoS flow belongs to the first service. According to the method, the access network device can obtain the transmission mode of the first service from the core network device. When a data packet loss or transmission failure occurs, the access network device and a terminal device may determine, based on the transmission mode of the service, whether reliability of unidirectional transmission needs to be improved or reliability of bidirectional transmission needs to be improved. In this way, a service shutdown caused by expiration of a survival time timer is avoided, to improve service reliability.

## Description

### TECHNICAL FIELD

Embodiments of this application relate to the wireless communication field, and in particular, to a data transmission method and an apparatus.

### BACKGROUND

In an industrial control scenario, a wired industrial internet of things (industrial Internet of things, IIoT) is usually deployed to control a production line. For example, a wired time sensitive network (time sensitive network, TSN) is deployed to control a production line. However, this method has some inherent disadvantages, for example, high cable deployment costs, security risks, and low flexibility. To resolve the foregoing disadvantages, the 3rd Generation Partnership Project (3rd Generation Partnership Project, 3GPP) proposes a solution of applying a 5G system (5th generation system, 5GS) to a TSN. The 5GS is applied to the TSN as a TSN bridge device. A data packet of the TSN may be transmitted through the 5GS.

### SUMMARY

This application provides a data transmission method and an apparatus, to improve reliability of data transmission.

According to a first aspect, this application provides a data transmission method, and the method is performed by a first core network device. The first core network device obtains a transmission mode of a first service. The transmission mode of the first service is an acknowledged mode or an unacknowledged mode. The first core network device indicates a transmission mode of a first QoS flow to an access network device. The first QoS flow belongs to the first service. By implementing the method described in the first aspect, the first core network device obtains the transmission mode of the first service, and sends the transmission mode of the first service to the access network device. When a data packet loss or a transmission failure occurs, the access network device may determine, based on a transmission mode of a service, whether reliability of unidirectional transmission (uplink or downlink) with a terminal device needs to be improved, or reliability of bidirectional transmission (uplink and downlink) needs to be improved, to avoid a service shutdown caused by expiration of a survival time timer because a transmission manner with higher reliability is not used in time when data transmission fails during transmission of data of the first service between the access network device and the terminal device, thereby ensuring service reliability.

In a possible implementation of the first aspect, the first core network device sends a request message to a second core network device. The request message is used to request the transmission mode of the first service.

In a possible implementation of the first aspect, the first core network device receives first indication information from the second core network device. When the first indication information is a first value, the transmission mode of the first service is the acknowledged mode; or when the first indication information is a second value, the transmission mode of the first service is the unacknowledged mode.

In a possible implementation of the first aspect, when first indication information is received from the second core network device, the first core network device determines that the transmission mode of the first service is the acknowledged mode, or when the first indication information is not received from the second core network device, the first core network device determines that the transmission mode of the first service is the unacknowledged mode; or when the first indication information is received from the second core network device, the first core network device determines that the transmission mode of the first service is the unacknowledged mode, or when the first indication information is not received from the second core network device, the first core network device determines that the transmission mode of the first service is the acknowledged mode.

In this implementation, the second core network device may indicate the transmission mode of the first service to the first core network device by using fewer bit overheads, to improve communication efficiency.

In a possible implementation of the first aspect, the first core network device sends second indication information to the access network device. When the second indication information indicates that the transmission mode of the first QoS flow is the unacknowledged mode, the second indication information is a third value; or when the second indication information indicates that the transmission mode of the first QoS flow is the acknowledged mode, the second indication information is a fourth value.

In a possible implementation of the first aspect, when the transmission mode of the first QoS flow is the unacknowledged mode, the first core network device sends the second indication information to the access network device; or when the transmission mode of the first QoS flow is the acknowledged mode, the first core network device sends the second indication information to the access network device.

In this implementation, the first core network device may indicate the transmission mode of the first service to the access network device by using fewer bit overheads, to improve communication efficiency.

In a possible implementation of the first aspect, the first core network device indicates the transmission mode of the first QoS flow by sending at least one of the following parameters to the access network device:
a first time difference, where the first time difference indicates a time difference between arrival of a first data packet at the access network device and arrival of a second data packet at the access network device;
a first time range, where the first time range indicates that the second data packet arrives at the access network device within the first time range after the first data packet arrives at the access network device;
a first parameter, where the first parameter indicates a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

In this manner, the first core network device may implicitly indicate a transmission device of the first service to the access network device, to avoid additional signaling overheads and improve communication efficiency.

According to a second aspect, this application provides a data transmission method, and the method is performed by an access network device. The access network device obtains a transmission mode of a first QoS flow from a first core network device. The transmission mode of the first QoS flow is an acknowledged mode or an unacknowledged mode. The access network device transmits data to a terminal device based on the transmission mode of the first QoS flow.

In a possible implementation of the second aspect, the access network device receives second indication information from the first core network device. When the second indication information is a third value, the transmission mode of the first QoS flow is the unacknowledged mode; or when the second indication information is a fourth value, the transmission mode of the first QoS flow is the acknowledged mode.

In a possible implementation of the second aspect, when the access network device receives second indication information from the first core network device, the transmission mode of the first QoS flow is the unacknowledged mode, or when the access network device does not receives the second indication information from the first core network device, the transmission mode of the first QoS flow is the acknowledged mode. Alternatively, when the access network device receives the second indication information from the first core network device, the transmission mode of the first QoS flow is the acknowledged mode, or when the access network device does not receive the second indication information from the first core network device, the transmission mode of the first QoS flow is the unacknowledged mode.

In a possible implementation of the second aspect, the access network device receives at least one parameter from the first core network device, and the access network device determines the transmission mode of the first QoS flow based on the at least one parameter. The at least one parameter includes:
a first time difference, where the first time difference indicates a time difference between arrival of a first data packet at the access network device and arrival of a second data packet at the access network device;
a first time range, where the first time range indicates that the second data packet arrives at the access network device within the first time range after the first data packet arrives at the access network device;
a first parameter, where the first parameter indicates a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

According to a third aspect, this application provides a data transmission method, and the method is performed by a first communication apparatus. The first communication apparatus obtains a transmission mode of a first QoS flow from a first core network device. The transmission mode of the first QoS flow is an acknowledged mode or an unacknowledged mode. The first communication apparatus indicates the transmission mode of the first QoS flow to a second communication apparatus.

In a possible implementation of the third aspect, the first communication apparatus receives second indication information from the first core network device. When the second indication information is a third value, the transmission mode of the first QoS flow is the unacknowledged mode; or when the second indication information is a fourth value, the transmission mode of the first QoS flow is the acknowledged mode.

In a possible implementation of the third aspect, when the first communication apparatus receives second indication information from the first core network device, the transmission mode of the first QoS flow is the unacknowledged mode, or when the first communication apparatus does not receive the second indication information from the first core network device, the transmission mode of the first QoS flow is the acknowledged mode. Alternatively, when the first communication apparatus receives the second indication information from the first core network device, the transmission mode of the first QoS flow is the acknowledged mode, or when the first communication apparatus does not receive the second indication information from the first core network device, the transmission mode of the first QoS flow is the unacknowledged mode.

In a possible implementation of the third aspect, the first communication apparatus sends third indication information to the second communication apparatus. When the third indication information indicates that the transmission mode of the first QoS flow is the unacknowledged mode, the third indication information is a fifth value; or when the third indication information indicates that the transmission mode of the first QoS flow is the acknowledged mode, the third indication information is a sixth value.

In a possible implementation of the third aspect, when the transmission mode of the first QoS flow is the unacknowledged mode, the first communication apparatus sends third indication information to the second communication apparatus; or when the transmission mode of the first QoS flow is the acknowledged mode, the first communication apparatus sends the third indication information to the second communication apparatus.

In a possible implementation of the third aspect, the first communication apparatus sends at least one of the following parameters to the second communication apparatus, to indicate that the transmission mode of the first QoS flow is the acknowledged mode:
a first time difference, where the first time difference indicates a time difference between arrival of a first data packet at the access network device and arrival of a second data packet at the access network device;
a first time range, where the first time range indicates that the second data packet arrives at the access network device within the first time range after the first data packet arrives at the access network device;
a first parameter, where the first parameter indicates a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

According to a fourth aspect, this application provides a data transmission method, and the method is performed by a second communication apparatus. The second communication apparatus obtains a transmission mode of a first QoS flow from a first communication apparatus. The transmission mode of the first QoS flow is an acknowledged mode or an unacknowledged mode. The second communication apparatus transmits data to the terminal device based on the transmission mode of the first QoS flow.

In a possible implementation of the fourth aspect, the second communication apparatus receives third indication information from the first communication apparatus. When the third indication information is a fifth value, the transmission mode of the first QoS flow is the unacknowledged mode; or when the third indication information is a sixth value, the transmission mode of the first QoS flow is the acknowledged mode.

In a possible implementation of the fourth aspect, when the second communication apparatus receives the third indication information from the first communication apparatus, the transmission mode of the first QoS flow is an unacknowledged mode, or when the second communication apparatus does not receive the third indication information from the first communication apparatus, the transmission mode of the first QoS flow is the acknowledged mode. Alternatively, when the second communication apparatus receives the third indication information from the first communication apparatus, the transmission mode of the first QoS flow is the acknowledged mode, or when the second communication apparatus does not receive the third indication information from the first communication apparatus, the transmission mode of the first QoS flow is the unacknowledged mode.

In a possible implementation of the fourth aspect, the second communication apparatus receives at least one parameter from the first communication apparatus, and the second communication apparatus determines the transmission mode of the first QoS flow based on the at least one parameter. The at least one parameter includes:
a first time difference, where the first time difference indicates a time difference between arrival of a first data packet at the access network device and arrival of a second data packet at the access network device;
a first time range, where the first time range indicates that the second data packet arrives at the access network device within the first time range after the first data packet arrives at the access network device;
a first parameter, where the first parameter indicates a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

According to a fifth aspect, a communication apparatus is provided, including a functional module configured to implement the method according to any one of the first aspect or the possible implementations of the first aspect.

According to a sixth aspect, a communication apparatus is provided, including a functional module configured to implement the method according to any one of the second aspect, the possible implementations of the second aspect, the third aspect, the possible implementations of the third aspect, the fourth aspect, or the possible implementations of the fourth aspect.

According to a seventh aspect, a communication apparatus is provided, including a processor and an interface circuit. The interface circuit is configured to: receive a signal from a communication apparatus other than the communication apparatus and transmit the signal to the processor, or send a signal from the processor to the communication apparatus other than the communication apparatus. The processor is configured to implement the method according to any one of the first aspect or the possible implementations of the first aspect by using a logic circuit or executing code instructions.

According to an eighth aspect, a communication apparatus is provided, including a processor and an interface circuit. The interface circuit is configured to: receive a signal from a communication apparatus other than the communication apparatus and transmit the signal to the processor, or send a signal from the processor to the communication apparatus other than the communication apparatus. The processor is configured to implement the method according to any one of the second aspect, the possible implementations of the second aspect, the third aspect, the possible implementations of the third aspect, the fourth aspect, or the possible implementations of the fourth aspect by using a logic circuit or executing code instructions.

According to a ninth aspect, a computer-readable storage medium is provided. The computer-readable storage medium stores a computer program or instructions. When the computer program or the instructions are executed, the method according to any one of the first aspect or the possible implementations of the first aspect is implemented.

According to a tenth aspect, a computer-readable storage medium is provided. The computer-readable storage medium stores a computer program or instructions. When the computer program or the instructions are executed, the method according to any one of the second aspect, the possible implementations of the second aspect, the third aspect, the possible implementations of the third aspect, the fourth aspect, or the possible implementations of the fourth aspect is implemented.

According to an eleventh aspect, a computer program product including instructions is provided. When the instructions are run, the method according to any one of the first aspect or the possible implementations of the first aspect is implemented.

According to a twelfth aspect, a computer program product including instructions is provided. When the instructions are run, the method according to any one of the second aspect, the possible implementations of the second aspect, the third aspect, the possible implementations of the third aspect, or the fourth aspect, the possible implementations of the fourth aspect is implemented.

According to a thirteenth aspect, a computer program is provided. The computer program includes code or instructions. When the code or the instructions are run, the method according to any one of the first aspect or the possible implementations of the first aspect is implemented.

According to a fourteenth aspect, a computer program is provided. The computer program includes code or instructions. When the code or the instructions are run, the method according to any one of the second aspect, the possible implementations of the second aspect, the third aspect, the possible implementations of the third aspect, the fourth aspect, the possible implementations of the fourth aspect is implemented.

According to a fifteenth aspect, a chip system is provided. The chip system includes a processor, may further include a memory, and is configured to implement at least one method according to any one of the first aspect, the possible implementations of the first aspect, the second aspect, the possible implementations of the second aspect, the third aspect, the possible implementations of the third aspect, the fourth aspect, or the possible implementations of the fourth aspect. The chip system may include a chip, or may include a chip and another discrete component.

According to a sixteenth aspect, a communication system is provided. The communication system includes the apparatus according to the fifth aspect or the seventh aspect and the apparatus according to the sixth aspect or the eighth aspect.

### BRIEF DESCRIPTION OF DRAWINGS

FIG. 1 is a schematic diagram of a network architecture to which an embodiment of this application is applicable;
FIG. 2a is a diagram of an example of a protocol layer structure between a terminal device and an access network device according to an embodiment of this application;
FIG. 2b is a schematic diagram of a CU-DU split architecture according to an embodiment of this application;
FIG. 2c is a schematic diagram of another CU-DU split architecture according to an embodiment of this application;
FIG. 2d is a schematic diagram of protocol stack distribution according to an embodiment of this application;
FIG. 2e is a schematic diagram of an architecture of a 5G system supporting a TSN network according to an embodiment of this application;
FIG. 3 shows an example of service interruption at an application layer according to an embodiment of this application;
FIG. 4, FIG. 5, and FIG. 6 are schematic flowcharts of data transmission methods according to an embodiment of this application;
FIG. 7 and FIG. 8 are schematic diagrams of structures of possible communication apparatuses according to an embodiment of this application; and
FIG. 9 is a schematic diagram of a structure of an access network device according to an embodiment of this application.

### DESCRIPTION OF EMBODIMENTS

Technical solutions provided in embodiments of this application may be applied to various communication systems, for example, a long term evolution (long term evolution, LTE) system, a 5th generation (5th generation, 5G) mobile communication system, a Wi-Fi system, a future communication system, a system integrating a plurality of communication systems, or the like. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communications, mMTC), device-to-device (device-to-device, D2D), vehicle to everything (vehicle to everything, V2X), vehicle to vehicle (vehicle to vehicle, V2V), internet of things (internet of things, IoT), and the like.

In embodiments of this application, "/" may represent an "or" relationship between associated objects. For example, A/B may represent A or B. The term "and/or" may indicate that there are three relationships between the associated objects. For example, A and/or B may represent the following three cases: Only A exists, both A and B exist, and only B exists. A and B may be singular or plural. In embodiments of this application, terms such as "first" or "second" may be used to distinguish between technical features with same or similar function. The terms such as "first" and "second" do not limit a quantity and an execution sequence, and the terms such as "first" and "second" do not indicate a definite difference. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

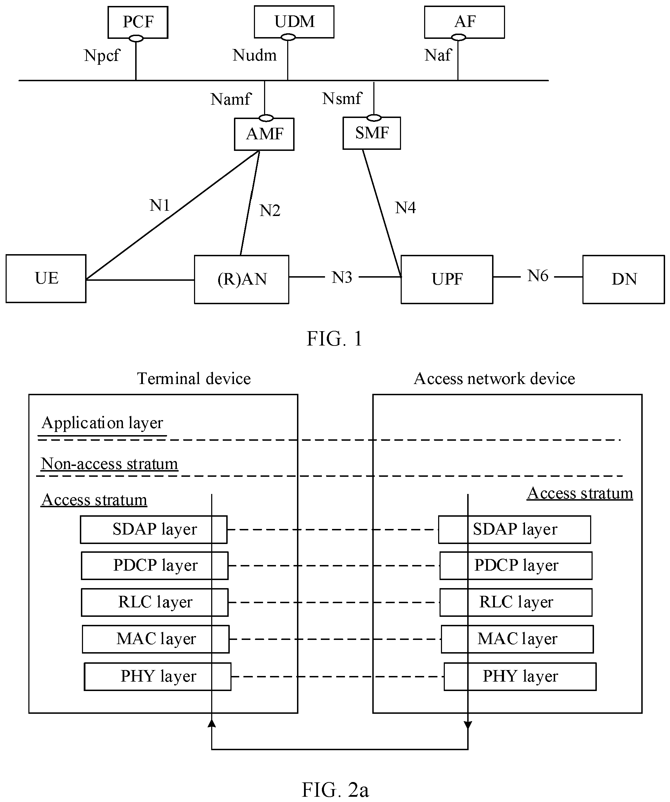

FIG. 1 is a schematic diagram of a network architecture to which an embodiment of this application is applicable. As shown in FIG. 1, a terminal device may access a wireless network, to obtain services of external networks (for example, a data network (data network, DN)) through the wireless network, or communicate with other devices through the wireless network, for example, communicate with another terminal device. Network elements in the wireless network include a radio access network (radio access network, RAN) network element and a core network (core network, CN) network element. A RAN is configured to connect a terminal device to the wireless network, and a CN is configured to manage the terminal device and provide a gateway for communicating with the DN. In embodiments of this application, a device in the RAN may be referred to as an access network device, and a device in the CN may be referred to as an access network device. Both the access network device and the access network device may be referred to as a network device.

The following separately describes in detail the terminal device, the RAN, the CN, and the DN in FIG. 1.

### 1. Terminal device

The terminal device includes a device that provides voice and/or data connectivity for a user, and may include, for example, a handheld device with a wireless connection function or a processing device connected to a wireless modem. The terminal device may communicate with a core network, and exchange voice and/or data with a radio access network (radio access network, RAN) by using the RAN. The terminal device may include user equipment (user equipment, UE), a wireless terminal device, a mobile terminal device, a device-to-device (device-to-device, D2D) terminal device, a vehicle to everything (vehicle to everything, V2X) terminal device, a machine-to-machine/machine type communications (machine-to-machine /machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may include a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes information sensing devices such as a bar code, radio frequency identification (radio frequency identification, RFID), a sensor, a global positioning system (global positioning system, GPS), and a laser scanner.

### 2. RAN device

An RAN may include one or more RAN devices, and an interface between the RAN device and the terminal device may be a Uu interface (or referred to as an air interface). Certainly, in future communication, names of these interfaces may remain unchanged, or may be replaced by other names. This is not limited in this application.

The RAN device is an access device used by the terminal device to access a mobile communication system in a wireless manner, and may be a base station, an evolved NodeB (evolved NodeB, eNodeB), a transmission reception point (transmission reception point, TRP), a next generation NodeB (next generation NodeB, gNB) in the 5G mobile communication system, a base station in a future mobile communication system, an access node in a Wi-Fi system, or the like. The RAN device may include a central unit (central unit, CU), or a distributed unit (distributed unit, DU), or include the CU and the DU.

In embodiments of this application, functions of the RAN device may alternatively be implemented by using a plurality of network function entities, and each network function entity is configured to implement some functions of the RAN device. These network function entities may be network elements in hardware devices, or may software functions run on dedicated hardware, or may be instantiated virtualization functions on a platform (for example, a cloud platform).

### (1) Protocol layer structure

Communication between the RAN device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In possible implementation, a service data adaptation protocol (service data adaptation protocol, SDAP) layer may be further included above the PDCP layer.

Data transmission between the access network device and the terminal device is used as an example. The data transmission needs to go through the user plane protocol layer such as the SDAP layer, the PDCP layer, the RLC layer, the MAC layer, and the physical layer. The SDAP layer, the PDCP layer, the RLC layer, the MAC layer, and the physical layer are also collectively referred to as an access stratum. For example, at least one data radio bearer (data radio bearer, DRB) is established between the access network device and the terminal device for data transmission. Each DRB may correspond to a group of functional entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may also be established between the access network device and the terminal device for signaling transmission. The DRB and the SRB are collectively referred to as a radio bearer (radio bearer, RB).

Downlink data transmission is used as an example. In FIG. 2a, a downward arrow indicates data sending, and an upward arrow indicates data receiving. After obtaining data from an upper layer, an SDAP layer entity may map the data to a PDCP layer entity of a corresponding DRB based on a quality of service flow indicator (QoS flow indicator, QFI) of the data. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and a corresponding physical layer entity wirelessly transmits the transport block. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transferred to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

For example, it can be further learned from FIG. 2a that, the terminal device further has an application layer and a non-access stratum. The application layer may be configured to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

### (2) CU and DU

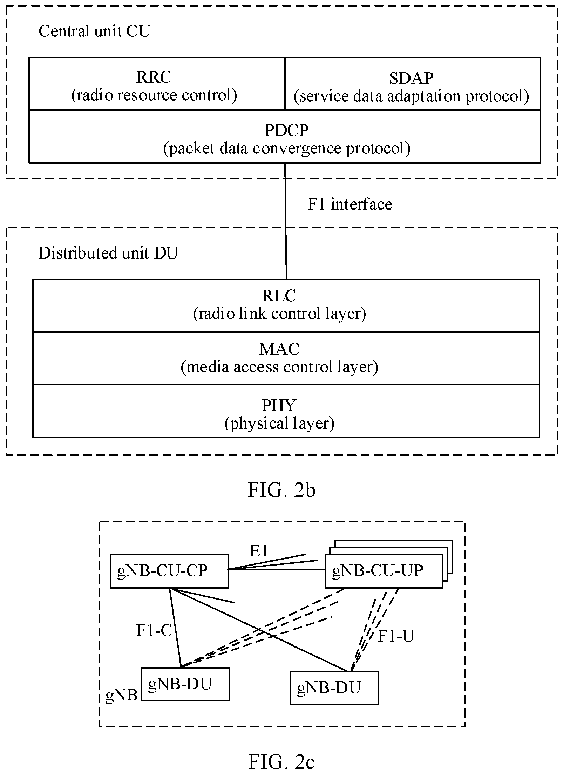

In embodiments of this application, the RAN device may include one or more central units (central unit, CU) and one or more distributed units (distributed unit, DU), and a plurality of DUs may be centrally controlled by one CU. For example, an interface between the CU and the DU may be referred to as an F1 interface. A control plane (control plane, CP) interface may be an F1-C interface, and a user plane (user plane, UP) interface may be an F1-U interface. The CU and the DU may be classified based on the protocol layers of the wireless network: For example, as shown in FIG. 2b, a function of a protocol layer above the PDCP layer is set on the CU, and a function of a protocol layer below the PDCP layer is set on the DU. For example, the DU may include an RLC layer, a MAC layer, and a physical (Physical, PHY) layer.

In a possible design, the DU may include a function of the RLC layer, a function of the MAC layer, and some functions of the PHY layer. For example, the DU may include a function of an upper layer in the PHY layer. The function of the upper layer in the PHY layer may include a cyclic redundancy check (cyclic redundancy check, CRC) function, channel coding, rate matching, scrambling, modulation, and layer mapping. Alternatively, the function of the upper layer in the PHY layer may include cyclic redundancy check, channel coding, rate matching, scrambling, modulation, layer mapping, and precoding. A function of a lower layer in the PHY layer may be implemented by another network entity independent of the DU. The function of the lower layer in the PHY layer may include precoding, resource mapping, physical antenna mapping, and radio frequency functions. Alternatively, the function of the lower layer in the PHY layer may include resource mapping, physical antenna mapping, and radio frequency functions. Function division of the upper layer and the lower layer in the PHY layer is not limited in embodiments of this application. When the function of the lower layer in the PHY layer may be implemented by another network entity independent of the DU, that the DU sends data or information to another communication apparatus (for example, a terminal device or a core network device) may be understood as: The DU performs functions of the RLC layer and the MAC layer, and some functions of the PHY layer. For example, after the DU completes the functions of the RLC layer and the MAC layer, and cyclic redundancy check, channel coding, rate matching, scrambling, modulation, and layer mapping, the network entity that is independent of the DU and that performs the function of the lower layer in the PHY layer performs remaining functions of mapping and sending on a physical resource.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into some processing functions having protocol layers. In a design, some functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be set on a network side for ease of centralized management. The DU may have a plurality of radio frequency functions, or the radio frequency functions may be set remotely. This is not limited in embodiments of this application.

For example, the functions of the CU may be implemented by one entity or different entities. For example, as shown in FIG. 2c, functions of a CU may be further divided, that is, a control plane and a user plane are separated, and are implemented by using different entities: a control plane CU entity (namely, a CU-CP entity) and a user plane CU entity (namely, a CU-UP entity). The CU-CP entity and the CU-UP entity may be coupled to a DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

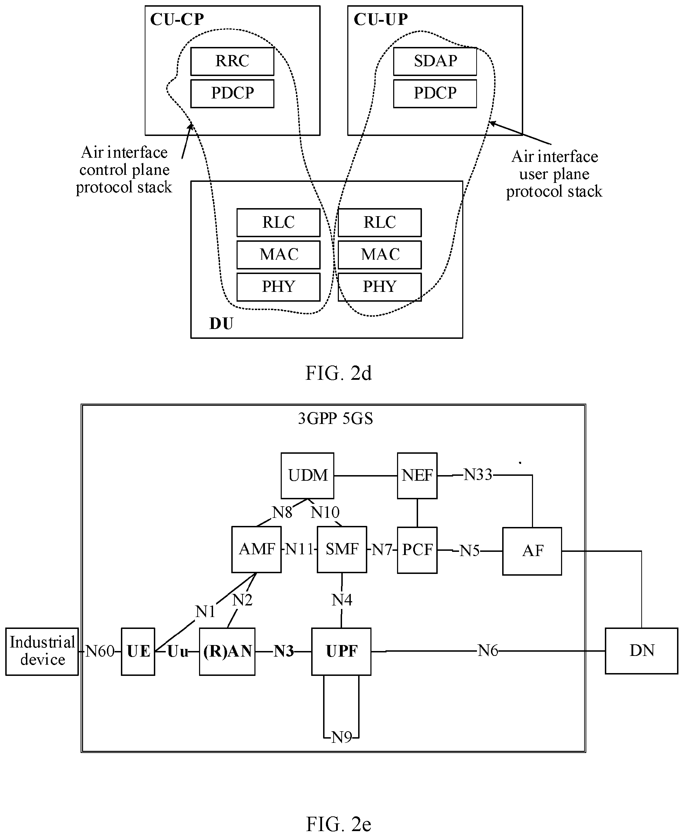

Based on FIG. 2c, FIG. 2d is a schematic diagram of distribution of air interface protocol stacks. As shown in FIG. 2d, for both a user plane and a control plane, the air interface protocol stack may be that an RLC layer, a MAC layer, and a PHY layer are on a DU, and a PDCP layer and protocol layers above the PDCP layer are on a CU.

It should be noted that in the architectures shown in FIG. 2b to FIG. 2d, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and the radio frequency apparatus.

### 3. CN

The CN may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a network exposure function (network exposure function, NEF) network element, a unified data repository (unified data repository, UDR) network element, and the like.

The AMF network element is a control plane network element provided by an operator network, and is responsible for access control and mobility management for accessing the operator network by a terminal device, for example, including functions such as mobility status management, allocation of a temporary user identity, and user authentication and authorization.

The SMF network element is a control plane network element provided by an operator network and is responsible for managing a PDU session of the terminal device. The PDU session is a channel used to transmit a PDU, and the terminal device needs to transmit a PDU to the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The UDM network element is a control plane network element provided by an operator, and is responsible for storing information such as a subscriber permanent identifier (subscriber permanent identifier, SUPI), a security context (security context), and subscription data of a subscriber in an operator network.

The AF network element is a function network element configured to provide various business services and can interact with a core network through another network element and interact with a policy management framework to perform policy management.

In addition, the CN may further include another possible network element, for example, a network exposure function (network exposure function, NEF) network element or a unified data repository (unified data repository, UDR) network element. The NEF network element is configured to provide a framework, authentication, and an interface that are related to network capability exposure and transmit information between a 5G system network function and another network function. The UDR network element is mainly configured to store subscription data, policy data, structured data for exposure, and application data that are related to a user.

### 4. DN

The DN, also be referred to as a packet data network (packet data network, PDN), is a network located outside an operator network. The operator network may access a plurality of DNs. Application servers corresponding to a plurality of services may be deployed in the DN, to provide a plurality of possible services for the terminal device. An application layer corresponding to an application layer of the terminal device may be disposed in the application server.

In FIG. 1, Npcf, Nudm, Naf, Namf, Nsmf, N1, N2, N3, N4, and N6 are interface sequence numbers. For meanings of these interface sequence numbers, refer to related standard protocols. This is not limited herein.

It may be understood that a 5G communication system is used as an example in FIG. 1. The solutions in embodiments of this application may alternatively be applied to another possible communication system, for example, a future 6th generation (the 6th generation, 6G) communication system. The foregoing network element of functions may be network elements in a hardware device, may be software functions run on dedicated hardware, or may be instantiated virtualization functions on a platform (for example, a cloud platform). Optionally, the foregoing network element of the functions may be implemented by one device, may be implemented by a plurality of devices, or may be one functional module in one device. This is not specifically limited in embodiments of this application.

FIG. 2e is a schematic diagram of an architecture of a 5GS supporting a TSN network to which an embodiment of this application is applicable. As shown in FIG. 2e, the TSN network may consider the 5GS as a TSN bridge device, and data packets of various industrial applications may be sent in an uplink/downlink through the 5GS. Data of an industrial application may be sent by a DN (for example, a TSN controller) to a UPF, sent by the UPF to UE connected to an industrial device (for example, a sensor or an operation arm), and sent by the UE to the connected industrial device. Similarly, industrial data may also be sent to the DN by the industrial device. In the 5GS, data transmission is performed between the UE and the base station through a Uu interface, and data transmission is performed between the base station and the core network data plane UPF through an N3 interface/N3 tunnel. In a possible implementation, the TSN controller may be deployed on a network side, for example, a side connected to the UPF, or may be deployed on a user side, for example, a side connected to the UE.

The following explains and describes related technical features in the embodiments of this application. It should be noted that these explanations are intended to make embodiments of this application easier to understand, but should not be considered as a limitation on the protection scope claimed in this application.

### 2. Time sensitive communication assistance information

For a time sensitive service, an SMF may provide time sensitive communication assistance information (time sensitive communication assistance information, TSCAI) of the service to an access network device when establishing a QoS flow. The TSCAI may describe a service feature of the time sensitive service used in the 5G system, to help the access network device perform effective resource scheduling. The TSCAI includes a flow direction (flow direction) of the QoS flow of the time sensitive service, for example, downlink or uplink. The TSCAI may further include a periodicity, indicating a time interval between two bursts of the time sensitive service. The TSCAI may further include burst arrival time (burst arrival time). For a downlink service, the burst arrival time is a latest possible moment at which the first data packet of a data burst arrives at an ingress of the access network device. For an uplink service, the burst arrival time is a moment at which the first data packet of a data burst arrives at an egress of a terminal device.

### 3. Survival time

A 5G communication system may support a plurality of possible services, for example, a URLLC service, and a 1 ms latency of and 99.999% reliability need to be ensured. An IIoT service requires higher latency and reliability assurance, for example, 0.5 ms latency and 99.9999% reliability. To avoid a great impact of occasional communication errors at a network layer on an application layer, survival time may be set at an application layer of an IIoT device. Survival time means that, if the application layer of the IIoT device does not receive a data packet within a time range in which the data packet is expected to arrive, a survival time timer is started. If an expected data packet arrives at the application layer during running of the timer, the timer stops. If the timer runs until the timer expires, to be specific, if no expected data packet arrives at the application layer in a time period in which the survival time timer runs, interruption occurs at the application layer. When interruption occurs at the application layer, the application layer enters a predefined state, for example, service interruption or breakdown.

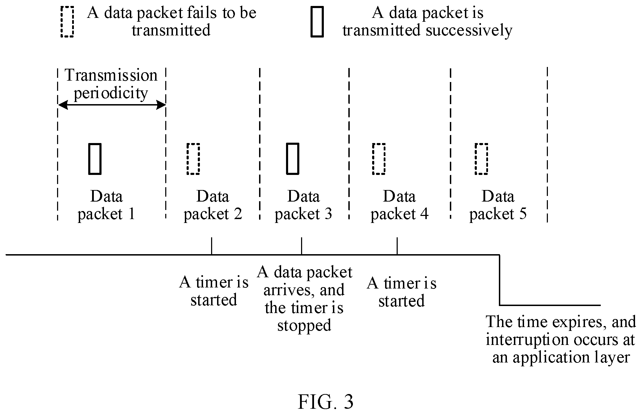

For a service in which a data packet is periodically generated, in an example, the survival time may be defined as a quantity (for example, a) of consecutive data packets that fail to be transmitted. If the quantity of consecutive data packets that fail to be transmitted is greater than or equal to a, service interruption occurs at the application layer. For example, as shown in FIG. 3, one data packet may be transmitted in one transmission periodicity, and a is 2. In other words, when two consecutive data packets fail to be transmitted, service interruption occurs at the application layer. Specifically, as shown in 4, when a data packet 2 in FIG. 3 fails to be transmitted, a timer starts. When a data packet 3 in a next periodicity is successfully transmitted, the timer stops. When a data packet 4 in the next period fails to be transmitted, the timer is started again. If a data packet 5 still fails to be transmitted, the timer expires, and interruption occurs at the application layer.

In another example, the survival time may also be defined as a quantity (for example, c) of consecutive transmission periodicities in which transmission fails. The transmission periodicity in which transmission fails may be a transmission periodicity in which a data packet fails to be transmitted, or a transmission periodicity in which a quantity of unsuccessfully transmitted data packets is greater than or equal to a first threshold, or a transmission periodicity in which an amount of unsuccessfully transmitted data is greater than or equal to a second threshold. The first threshold and the second threshold may be preset. If the quantity of consecutive transmission periodicities in which transmission fails is greater than or equal to c, service interruption occurs at the application layer.

It should be noted that downlink transmission is used as an example, and the foregoing data packet that fails to be transmitted may include:
(1) a data packet that is determined by a PDCP layer of an access network device and that fails to be transmitted (that is, fails to be sent);
(2) a data packet discarded by a PDCP layer due to expiration of a discard (discard) timer (timer) at the PDCP layer; and
(3) a data packet that is sent by the access network device to a terminal device through an air interface, but for which an acknowledgment response (for example, an ACK) has not received from the terminal device.

### 4. Unacknowledged mode and acknowledged mode

There are a variety of IIoT services in the industrial field, and there are a plurality of interaction modes between controllers and devices of these IIoT services.

1. Unacknowledged mode

In embodiments of this application, the unacknowledged mode may also be referred to as a point-to-point unacknowledged mode, a non-response mode, or a non-association mode. Alternatively, the unacknowledged mode may be understood as: There is no association relationship or binding relationship between uplink data transmission and downlink data transmission. Alternatively, the unacknowledged mode may be understood as: A transmit end sends a data packet/message, and a receiving end does not send feedback information or a response message corresponding to the data packet/message. Alternatively, the unacknowledged mode may have another name. This is not limited in embodiments of this application. For ease of description, the following uses "unacknowledged mode" as an example for description.

In the unacknowledged mode, the receiving end determines, based on an interval of receiving data packets, whether the service is normal. Specifically, the transmit end periodically sends data/a control instruction, and the receiving end performs corresponding operations after receiving the data/control instruction. If the receiving end does not receive a data packet within a time period after receiving a data packet, the receiving end starts a survival time timer. If the receiving end does not receive a data packet within survival time, it is considered that a link faulty/shutdown occurs.

### 2. Acknowledged mode

In embodiments of this application, the acknowledged mode may also be referred to as a point-to-point acknowledged mode, a response mode, or an association mode. Alternatively, the acknowledged mode may be understood as: There is an association relationship or binding relationship between uplink data transmission and downlink data transmission. Alternatively, the acknowledged mode may be understood as: A transmit end sends a data packet/message, and a receiving end sends feedback information or a response message corresponding to the data packet/message. Alternatively, the acknowledged mode may have another name. This is not limited in embodiments of this application. For ease of description, the following uses "acknowledged mode" as an example for description.

In the acknowledged mode, the transmit end determines, based on acknowledgment from the receiving end, whether a service is normal. Specifically, the transmit end periodically (for example, a periodicity is T) sends data/a control instruction, and the receiving end responds to the data/instruction after receiving the data/instruction. If the transmit end does not receive a response message from the receiving end within a time period, the transmit end starts a survival time timer and performs retransmission. After the transmit end performs at least one retransmission during running of the survival time timer (if a plurality of retransmissions are performed, an interval for retransmission is T), if no response message is received from the receiving end, it is considered that a link faulty or shutdown occurs.

It can be learned from the foregoing description that, to ensure availability of the IIoT service, when a transmission packet loss occurs, the application layer of the IIoT device starts the timer. To avoid an application shutdown caused by timer expiration, transmission reliability of communication links needs to be improved to prevent a packet loss. In a possible implementation, the SMF uses the TSCAI sent to the access network device to carry the survival time. It can be learned from the foregoing description of the TSCAI that the TSCAI is at a granularity of uplink/downlink QoS flows. Therefore, the survival time is also at a granularity of uplink/downlink QoS flows. However, for a service in the acknowledged mode, the transmit end needs to determine, based on the acknowledgment of the receiving end, whether the service is normal. Therefore, when a packet loss occurs in transmission in one direction, only transmission reliability in this direction is improved, and there is still a high risk of an application shutdown. For example, when a packet loss occurs in uplink transmission, (herein, sending a data packet by the transmit end to the receiving end is referred to as uplink transmission, and sending a response data packet by the receiving end to the transmit end is referred to as downlink transmission), reliability of uplink transmission is improved, and a packet loss probability of subsequent uplink transmission of data is reduced. However, reliability of downlink transmission is not improved, and there is still a probability of a packet loss. If subsequent downlink transmission of a response data packet fails, an application shutdown occurs. For a service in the acknowledged mode, if a packet loss occurs in one transmission direction, reliability of bidirectional transmission needs to be improved, to ensure service availability.

In view of this, the present invention provides a data transmission method, to improve reliability of data transmission.

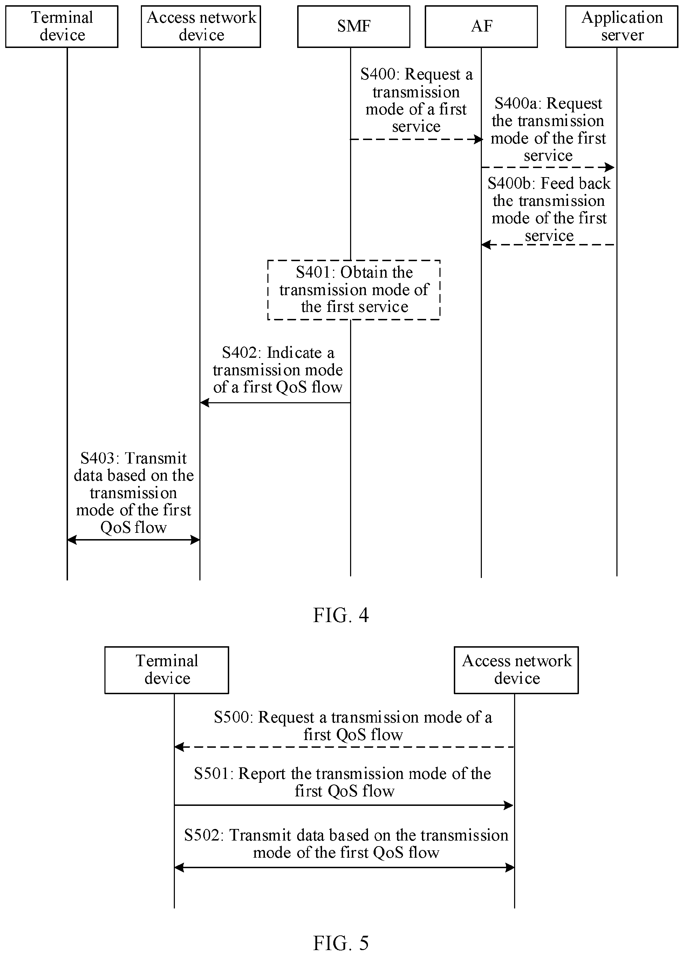

FIG. 4 is a schematic flowchart of a data transmission method according to an embodiment of this application. This embodiment relates to a specific process of data transmission between a first core network device, a second core network device, an access network device, and a terminal device. This embodiment may be performed by the first core network device, the second core network device, the access network device, and the terminal device, or may be separately applied to a module, for example, a chip, in the first core network device, the second core network device, the access network device, and the terminal device. The following provides description by using an example in which the first core network device, the second core network device, the access network device, and the terminal device are used as execution entities.

In this embodiment of this application, the first core network device may be a core network device other than an SMF. For example, the first core network device may be an AMF. The second core network device may be an AF or another core network device. For example, the second core network device may be a PCF, or an application server. This is not limited in this embodiment of this application. The following provides description by using an example in which the first core network device is an SMF and the second core network device may be an AF.

As shown in FIG. 4, the method may include S401, S402, and S403. S403 may be implemented as an independent embodiment. An execution sequence of the steps is not limited in this embodiment of this application.

S401: The SMF obtains a transmission mode of a first service, where the transmission mode of the first service is an acknowledged mode or an unacknowledged mode.

Optionally, "the SMF obtains a transmission mode of a first service" may be replaced with "the SMF obtains a transmission mode of a first QoS flow", "the SMF obtains a transmission mode of a first service flow", or "the SMF obtains a transmission mode of a first application". In this embodiment of this application, the first service flow belongs to the first service, and the first service corresponds to the first application. That is, a granularity at which the SMF obtains the transmission mode may be a service granularity, a QoS flow granularity, a service flow granularity, or an application granularity. S401 is described by using "the SMF obtains a transmission mode of a first service". Optionally, in this embodiment of this application, the first service may be an IIoT service.

For example, a manner in which the SMF obtains the transmission mode of the first service includes but is not limited to the following several manners:
Manner 1: The AF sends first indication information to the SMF. Correspondingly, the SMF receives the first indication information from the AF. When a value of the first indication information is a first value, it indicates that the transmission mode of the first service is the acknowledged mode; or when a value of the first indication information is a second value, it indicates that the transmission mode of the first service is the unacknowledged mode.
Manner 2: When the AF sends first indication information to the SMF, that is, when the SMF receives the first indication information from the AF, it indicates that the transmission mode of the first service is the acknowledged mode; or when the AF does not send the first indication information to the SMF, that is, when the SMF does not receive the first indication information from the AF, it indicates that the transmission mode of the first service is the unacknowledged mode.
Manner 3: When the AF sends first indication information to the SMF, that is, when the SMF receives the first indication information from the AF, it indicates that the transmission mode of the first service is the unacknowledged mode; or when the AF does not send the first indication information to the SMF, that is, when the SMF does not receive the first indication information from the AF, it indicates that the transmission mode of the first service is the acknowledged mode.

Optionally, in the foregoing three manners, the first indication information may be referred to as interaction mode information, or may also be referred to as feature information or binding information. The information reflects whether there is a binding relationship or an association relationship between uplink data transmission and downlink data transmission of the first service. Optionally, in the foregoing three manners, the AF may send the first indication information to the SMF through a PCF. Correspondingly, the SMF may receive the first indication information from the AF through the PCF.

Optionally, the transmission mode of the first service may be preconfigured in the SMF. In this case, the SMF may not need to perform S401.

S402: The SMF indicates the transmission mode of the first QoS flow to the access network device. Correspondingly, the access network device obtains the transmission mode of the first QoS flow from the SMF. The first QoS flow belongs to the first service.

Optionally, "the SMF indicates the transmission mode of the first QoS flow to the access network device" may be replaced with "the SMF indicates the transmission mode of the first service to the access network device", "the SMF indicates the transmission mode of the first service flow to the access network device", or "the SMF indicates the transmission mode of the first application to the access network device". That is, a granularity at which the SMF indicates the transmission mode to the access network device may be a service granularity, a QoS flow granularity, a service flow granularity, or an application granularity. S402 is described by using "the SMF indicates the transmission mode of the first QoS flow to the access network device".

For example, a manner in which the SMF indicates the transmission mode of the first QoS flow to the access network device includes but is not limited to the following several manners:
Manner 1: The SMF sends second indication information to the access network device. When the second indication information is a third value, it indicates that the transmission mode of the first QoS flow is the unacknowledged mode; or when the second indication information is a fourth value, it indicates that the transmission mode of the first QoS flow is the acknowledged mode.
Manner 2: When the SMF sends second indication information to the access network device, it indicates that the transmission mode of the first QoS flow is the acknowledged mode; or when the SMF does not send the second indication information to the access network device, it indicates that the transmission mode of the first QoS flow is the unacknowledged mode.
Manner 3: When the SMF sends second indication information to the access network device, it indicates that the transmission mode of the first QoS flow is the unacknowledged mode; or when the SMF does not send the second indication information to the access network device, it indicates that the transmission mode of the first QoS flow is the acknowledged mode.
Manner 4: The SMF indicates the transmission mode of the first QoS flow to the access network device in an implicit manner. That is, the SMF does not directly indicate the transmission mode of the first QoS flow, but indicates another parameter or information. The access network device may derive the transmission mode of the first QoS flow by using the indicated parameter or information.

For example, the SMF may indicate at least one of the following parameters to the access network device:

### 1. First time difference

For example, the first time difference may indicate a time difference between arrival of a first data packet at the access network device and arrival of a second data packet at the access network device. The first data packet is any uplink data packet of the first QoS flow, and the second data packet is any downlink data packet of the first QoS flow. Alternatively, the first data packet is any downlink data packet of the first QoS flow, and the second data packet is any uplink data packet of the first QoS flow.

For example, when the first time difference is a positive number, it indicates that after an uplink data packet arrives at the access network device, a downlink data packet arrives at the access network device after the first time difference. When the first time difference is a negative number, it indicates that after a downlink data packet arrives at the access network device, an uplink data packet arrives at the access network device after the first time difference. Alternatively, when the first time difference is a negative number, it indicates that after an uplink data packet arrives at the access network device, a downlink data packet arrives at the access network device after the first time difference. When the first time difference is a positive number, it indicates that after a downlink data packet arrives at the access network device, an uplink data packet arrives at the access network device after the first time difference.

Optionally, the first time difference may alternatively indicate a time difference between arrival of the first data packet at the terminal device and arrival of the second data packet at the access network device. Alternatively, the first time difference indicates a time difference between arrival of the first data packet at the terminal device and arrival of the second data packet at the terminal device.

Optionally, in this embodiment of this application, the arrival at the access network device may alternatively be understood as arrival at an egress of the access network device, or arrival at an ingress of the access network device, or arrival at an SDAP entity/PDCP entity/RLC entity/MAC entity/PHY entity of the access network device. The arrival at the terminal device may also be understood as arrival at an egress of the terminal device, or arrival at an ingress of the terminal device, or arrival at an SDAP entity/PDCP entity/RLC entity/MAC entity/PHY entity of the terminal device.

Optionally, the arrival of the first data packet at the terminal device may be understood as arrival of the first data packet arrives at the ingress of the terminal device, and the arrival of the second data packet at the terminal device may be understood as arrival of the second data packet at the ingress of the terminal device. Alternatively, the arrival of the first data packet at the terminal device may be understood as arrival of the first data packet arrives at the ingress of the terminal device, and the arrival of the second data packet at the terminal device may be understood as arrival of the second data packet at the egress of the terminal device. The arrival of the first data packet at the terminal device may be understood as arrival of the first data packet arrives at the egress of the terminal device, and the arrival of the second data packet at the terminal device may be understood as arrival of the second data packet at the ingress of the terminal device. The arrival of the first data packet at the terminal device may be understood as arrival of the first data packet arrives at the egress of the terminal device, and the arrival of the second data packet at the terminal device may be understood as arrival of the second data packet at the egress of the terminal device.

Optionally, the arrival of the first data packet at the access network device may be understood as arrival of the first data packet at the ingress of the access network device, and the arrival of the second data packet at the access network device may be understood as arrival of the second data packet at the ingress of the access network device. Alternatively, the arrival of the first data packet at the access network device may be understood as arrival of the first data packet at the ingress of the access network device, and the arrival of the second data packet at the access network device may be understood as arrival of the second data packet at the egress of the access network device. The arrival of the first data packet at the access network device may be understood as arrival of the first data packet at the egress of the access network device, and the arrival of the second data packet at the access network device may be understood as arrival of the second data packet at the ingress of the access network device. The arrival of the first data packet at the access network device may be understood as arrival of the first data packet at the egress of the access network device, and the arrival of the second data packet at the access network device may be understood as arrival of the second data packet at the egress of the access network device.

Optionally, the first data packet and the second data packet may arrive at a same entity or different entities of the terminal device. For example, the first time difference may indicate a time difference between arrival of the first data packet at the PDCP entity of the terminal device and arrival of the second data packet at the PDCP entity of the terminal device. The first time difference may alternatively indicate a time difference between arrival of the first data packet at the PDCP entity of the terminal device and arrival of the second data packet at the MAC entity of the terminal device.

Optionally, the first data packet and the second data packet may arrive at a same entity or different entities of the access network device. For example, the first time difference may indicate a time difference between arrival of the first data packet at the PDCP entity of the access network device and arrival of the second data packet at the PDCP entity of the access network device. The first time difference may alternatively indicate a time difference between arrival of the first data packet at the PDCP entity of the access network device and arrival of the second data packet at the MAC entity of the access network device.

### 2. First time range

For example, the first time range indicates that the second data packet arrives at the access network device within the first time range after the first data packet arrives at the access network device. Alternatively, the first time range may indicate that the second data packet arrives at the terminal device within the first time range after the first data packet arrives at the access network device. Alternatively, the first time range may indicate that the second data packet arrives at the access network device within the first time range after the first data packet arrives at the terminal device. Alternatively, the first time range may indicate that the second data packet arrives at the terminal device within the first time range after the first data packet arrives at the terminal device.

Optionally, for descriptions of arrival at the access network device and arrival at the terminal device, refer to descriptions of the arrival at the access network device and the arrival at the terminal device in the first time difference.

### 3. First parameter

For example, the first parameter indicates a maximum value of a sum of a transmission latency of the first data packet and a transmission latency of the second data packet.

### 4. Survival time of the first QoS flow in an uplink direction and survival time of the first QoS flow in a downlink direction

For example, TSCAI corresponding to the first QoS flow includes the survival time corresponding to the uplink direction and the survival time corresponding to the downlink direction. The survival time corresponding to the uplink direction and the survival time corresponding to the downlink direction may be the same or different.

### 5. Slice information corresponding to the first QoS flow

For example, when the SMF indicates any one or more of the foregoing 1 to 4 to the access network device, it indicates that the SMF indicates, to the access network device, that the transmission mode of the first QoS flow is the acknowledged mode. Correspondingly, when the access network device receives any one or more of the foregoing 1 to 4, the access network device may learn that there is an association relationship between a data packet transmitted in uplink and a data packet transmitted in downlink of the QoS flow. For example, a downlink data packet should arrive in a fixed time period after each uplink data packet, to determine that the transmission mode of the QoS flow is the acknowledged mode.

For example, when the SMF indicates, to the access network device, the slice information corresponding to the first QoS flow, if a transmission mode corresponding to the slice is the acknowledged mode, the SMF indicates, to the access network device, that the transmission mode of the first QoS flow is the acknowledged mode. If the transmission mode corresponding to the slice is the unacknowledged mode, the SMF indicates, to the access network device, that the transmission mode of the first QoS flow is the unacknowledged mode.

Optionally, the SMF may indicate the transmission mode of the first QoS flow to the access network device through the AMF. For example, when the SMF indicates the transmission mode of the first QoS flow to the access network device in Manner 1 to Manner 3, the SMF may send the second indication information to the AMF, and then the AMF sends the second indication information to the access network device. When the SMF indicates the transmission mode of the first QoS flow to the access network device in Manner 4, the SMF may send the parameter in Manner 4 to the AMF, and then the AMF sends the parameter to the access network device.

S403: The access network device transmits data to the terminal device based on the transmission mode of the first QoS flow.

Optionally, S403 may be independently implemented. That is, the access network device may store information about the transmission mode of the first QoS flow, or the access network device may obtain the transmission mode of the first QoS flow in a manner other than S402. This is not limited in this embodiment of this application. In this case, the access network device may transmit data to the terminal device based on the transmission mode of the first QoS flow.

Optionally, S403 includes an operation 1 and/or an operation 2.

The operation 1 includes S4100 and S4200.

S4100: The terminal device performs uplink transmission with the access network device by using a first configuration.

S4200: When determining that downlink transmission fails, the terminal device performs uplink transmission with the access network device by using a second configuration. Optionally, reliability of the second configuration is higher than reliability of the first configuration.

Optionally, when the transmission mode of the first QoS flow is the acknowledged mode, the access network device sends configuration information to the terminal device. Correspondingly, the terminal device receives the configuration information from the access network device. The configuration information is configured by the terminal device as follows: When the terminal device detects that downlink transmission fails, the terminal device performs uplink transmission with the access network device by using the second configuration.

For example, when any one of the following is met, the terminal device determines that downlink transmission fails:
1. The terminal device fails to receive downlink data on a time-frequency resource. The time-frequency resource may be a specified cell group/cell/carrier/carrier set/bandwidth part (bandwidth part, BWP)/BWP set. Alternatively, the time-frequency resource may be a semi-persistent scheduling (semi-persistent scheduling, SPS) resource. Alternatively, the time-frequency resource may be a dynamically allocated downlink resource, for example, a downlink resource scheduled by the access network device by using downlink control information (downlink control information, DCI) scrambled by a specific radio network temporary identifier (radio network temporary identifier, RNTI), or a downlink resource scheduled by using DCI sent by the access network device in a specific control resource set (control-resource set, CORESET) or search space (search space), or a downlink resource allocated by an indication field carried in DCI for allocating a downlink resource.
2. The terminal device fails to decode the downlink data. For example, for a downlink transport block, the terminal device fails to decode the downlink transport block.
3. The terminal device receives indication information from the access network device, and the indication information indicates to retransmit downlink data. For example, the access network device performs scheduling and retransmission by using DCI scrambled by a cell radio network temporary identifier (cell radio network temporary identifier, C-RNTI) or a configured scheduling RNTI (configured scheduling radio network temporary identifier, CS-RNTI). Alternatively, the access network device schedules, by using the indication information, retransmission of a specific preconfigured hybrid automatic repeat request (hybrid automatic repeat request, HARQ) process.
4. The terminal device fails to receive, at a specific time point or within a specific time range, a data packet sent by the access network device. Optionally, the data packet may be a data packet to which a specified DRB or QoS flow belongs. For example, each time the terminal device receives a data packet, the terminal device starts a timer A. If a next data packet fails to be received when the timer A expires, the terminal device determines that downlink transmission fails.

When determining that downlink transmission fails, a manner in which the terminal device performs uplink transmission with the access network device by using the second configuration may include but is not limited to any one or more of the following manners:
Manner 1: The terminal device activates a PDCP duplication function, for example, activates a PDCP duplication function of a DRB corresponding to the failed downlink transmission.

It may be understood that in Manner 1, the second configuration may be understood as activating the PDCP duplication function, and the first configuration may be understood as inactivating the PDCP duplication function.

Optionally, Manner 1 includes the following two operations:
Operation a. The access network device sends an RRC message to the terminal device. Correspondingly, the terminal device receives the RRC message from the access network device. The RRC message indicates a relationship between a downlink resource and a DRB, or the RRC message indicates a relationship between a downlink resource and a logical channel. For example, the downlink resource may be an SPS resource.
Operation b: When the terminal device fails to receive downlink data on the downlink resource, the terminal device determines, based on the correspondence between a downlink resource and a DRB/logical channel, a DRB corresponding to the downlink resource, and activates a PDCP duplication function of the DRB.

The terminal device activates the PDCP duplication function of the DRB, so that reliability of subsequent uplink transmission can be improved. It may be understood that the PDCP duplication function means performing duplication transmission by using at least two RLC entities associated with the DRB. Optionally, a status after the PDCP duplication function of the DRB is activated may be preconfigured by the access network device. That is, the access network device may prespecify RLC entities that are associated with the DRB and that need to be used by the terminal device to perform uplink duplication transmission.

Manner 2: For example, Manner 2 may include the following three operations:
Operation a: the same as the operation a in Manner 1.
Operation c: The access network device configures two sets of parameters for one DRB. One set of parameters is a default configuration (the first configuration), and the other set of parameters is a standby configuration (the second configuration).
Operation d: When the terminal device fails to receive downlink data on a downlink resource, the terminal device replaces, with the second configuration, a configuration (the first configuration) associated with a DRB corresponding to the downlink resource.

The replacement of the first configuration with the second configuration may include a related configuration parameter of a PDCP entity/an RLC entity/a logical channel or a resource configuration parameter. For example, the related configuration parameter of the logical channel may include a logical channel priority or a scheduling request (scheduling request, SR) configuration associated with the logical channel. The resource configuration parameter may include a quantity of repeated transmissions on a CG, and the like. This is not limited in this embodiment of this application.

For example, when the terminal device fails to receive the downlink data on the downlink resource (it is assumed that the downlink resource corresponds to a first DRB), the terminal device switches an RLC entity associated with a PDCP entity corresponding to the first DRB from a first RLC entity to a second RLC entity. The first RLC entity is a default RLC entity to ensure low reliability, and the second RLC entity is a standby RLC entity to ensure high reliability.

In the foregoing manner, the terminal device can improve reliability of uplink transmission, to ensure successful transmission of subsequent one or more uplink data packets, and avoid an application shutdown caused by expiration of a survival time timer.

Optionally, in addition to the operation a, the operation c, and the operation d, Manner 2 may further include an operation e, an operation f, or an operation g.

Operation e: When the terminal device determines that downlink transmission fails, the terminal device starts a first timer, and after the first timer expires, performs uplink transmission with the access network device by using the first configuration. Optionally, duration of the first timer is preconfigured by the access network device.

For example, when the terminal device fails to receive the downlink data on the downlink resource (it is assumed that the downlink resource corresponds to the first DRB), the terminal device starts the first timer, performs switching from the first RLC entity to the second RLC entity, and performs uplink transmission with the access network device by using the second RLC entity. When the first timer expires, the terminal device performs switching from the second RLC entity back to the first RLC entity, and performs uplink transmission with the access network device by using the first RLC entity.

Operation f: When determining that downlink transmission fails, the terminal device initializes a first counter. Each time the terminal device sends an uplink data packet, the first counter is increased by 1. When a value of the first counter reaches a first threshold, the terminal device performs uplink transmission with the access network device by using the first configuration. Optionally, the first threshold is preconfigured by the access network device. Alternatively, when determining that downlink transmission fails, the terminal device initializes the first counter. Each time the terminal device sends an uplink data packet, the first counter is decreased by 1. When a value of the first counter reaches a specific value (for example, 0), the terminal device performs uplink transmission with the access network device by using the first configuration.

Operation g: The terminal device receives indication information from the access network device. The indication information indicates to perform uplink transmission with the access network device by using the first configuration. Optionally, the indication information may be DCI, RRC, or a media access control control element (Media Access Control control element, MAC CE).

In the foregoing manner, when detecting that transmission of the downlink data fails, the terminal device may perform uplink data transmission with the access network device by using the second configuration (a higher-reliability configuration, for example, activation of a PDCP duplication transmission function), to ensure reliability of data transmission in the acknowledged mode. After data transmission is stable (for example, no packet loss occurs for a period of time), the terminal device falls back to the first configuration to perform uplink transmission with the access network device. For example, after no packet loss occurs for a period of time, the terminal device may deactivate the PDCP duplication transmission function, to avoid resource consumption caused by reliability assurance, and improve resource utilization.

Operation 2: When the access network device detects that uplink transmission fails, if the transmission mode of the first QoS flow is the unacknowledged mode, the access network device may improve reliability of uplink transmission. If the transmission mode of the first QoS flow is the acknowledged mode, the access network device may not only improve reliability of uplink transmission, but also improve reliability of downlink transmission.

For example, when any one of the following is met, the access network device determines that uplink transmission fails:
1. The access network device fails to receive uplink data on a time-frequency resource. The time-frequency resource may be a specified cell group/cell/carrier/carrier set/BWP/BWP set. Alternatively, the time-frequency resource may be a configuration grant (configured grant, CG). Alternatively, the time-frequency resource may be a dynamically allocated resource, for example, an uplink resource scheduled by the access network device by using DCI scrambled by a specific RNTI, or an uplink resource scheduled by using DCI sent by the access network device in a specific CORESET or search space, or an uplink resource allocated by an indication field carried in DCI for allocating a downlink resource.
2. The access network device fails in decoding. For example, for an uplink transport block, the access network device fails to decode the uplink transport block.
3. The access network device fails to receive an uplink data packet of a specific QoS flow at a predetermined moment.

For example, a manner in which the access network device improves reliability of downlink transmission may include but is not limited to any one or more of the following manners:
Manner 1: The access network device activates a PDCP duplication function, for example, activates a PDCP duplication function of a DRB corresponding to the failed uplink transmission.
Manner 2: The access network device configures two sets of configurations for one DRB. One is a default configuration (referred to as a configuration 3 below), and the other is a standby configuration (referred to as a configuration 4 below). Optionally, the configuration 3 is used to ensure low transmission reliability, and the configuration 4 is used to ensure high transmission reliability. When the access network device fails to receive the uplink data on the uplink resource, the access network device switches a configuration associated with the DRB corresponding to the uplink resource from the configuration 3 to the configuration 4, and performs downlink transmission with the terminal device by using the configuration 4. The configuration 3 and the configuration 4 may include a related configuration parameter of a PDCP entity/RLC entity/logical channel or a resource configuration parameter.

Optionally, the access network device may control, by setting a timer or a counter, to fall back to the configuration 3 to perform downlink transmission. For example, when determining that uplink transmission fails, the access network device starts a timer, and performs downlink transmission with the terminal device by using the configuration 4, and after the timer expires, the access network device falls back to the configuration 3 to perform downlink transmission with the terminal device. Alternatively, when determining that uplink transmission fails, the access network device initializes a counter, performs downlink transmission with the terminal device by using the configuration 4, and when a value of the counter reaches a preset threshold, falls back to the configuration 3 to perform downlink transmission with the terminal device.

Optionally, in the foregoing process, if the terminal device detects that uplink transmission fails, reliability of subsequent uplink transmission also needs to be improved, to prevent a packet loss in subsequent uplink transmission. Specifically, the terminal device may improve reliability of uplink transmission in the manner in Operation 1.

In the foregoing manner, when detecting that transmission of the uplink data fails, the access network device may use a configuration with higher reliability, for example, activate a PDCP duplication transmission function, and perform downlink data transmission with the terminal device by using the PDCP duplication transmission function, to ensure reliability of data transmission of an IIoT service in the acknowledged mode. After data transmission is stable (for example, no packet loss occurs for a period of time), the access network device may fall back to an original configuration to perform downlink transmission with the terminal device. For example, after no packet loss occurs for a period of time, the access network device may deactivate the PDCP duplication transmission function, to avoid resource consumption caused by reliability assurance, and improve resource utilization.

Optionally, the embodiment shown in FIG. 4 may further include S400.

S400: The SMF sends a request message to the AF. Correspondingly, the AF receives the request message from the SMF. The request message is used to request the transmission mode of the first service.

Optionally, "the request message is used to request the transmission mode of the first service" may be replaced with "the request message is used to request the transmission mode of the first QoS flow", "the request message is used to request the transmission mode of the first service flow", or "the request message is used to request the transmission mode of the first application". That is, the transmission mode requested by the request message may be at a service granularity, a QoS flow granularity, a service flow granularity, or an application granularity.

Optionally, the SMF sends the request to the AF through a PCF.

Optionally, the embodiment shown in FIG. 4 may further include S400a and/or S400b.

S400a: The AF sends a request message to an application server. Correspondingly, the application server receives the request message from the AF. The request message is used to request the transmission mode of the first service. Optionally, similar to S400, the transmission mode requested by the request message may be at a service granularity, a QoS flow granularity, a service flow granularity, or an application granularity.

S400b: The application server sends feedback information to the AF. Correspondingly, the AF receives the feedback information from the application server. The feedback information carries the transmission mode of the first service. Optionally, similar to S400, the transmission mode carried in the feedback information may be at a service granularity, a QoS flow granularity, a service flow granularity, or an application granularity.

It should be understood that, when the AF stores information about the transmission mode of the first service/the first QoS flow/the first service flow/the first application, the AF may not perform S400a and S400b.

The foregoing embodiment provides a data transmission method. The access network device may obtain a transmission mode of an IIoT service from a core network device such as an SMF. When a data packet loss or a transmission failure occurs, the access network device and the terminal device may determine, based on the transmission mode of the service, whether reliability of unidirectional transmission needs to be improved or reliability of bidirectional transmission needs to be improved. For example, when the transmission mode is the acknowledged mode, when an uplink/downlink transmission failure is detected, the access network device and the terminal device need to perform uplink transmission and downlink transmission in a more robust transmission manner. Therefore, a service shutdown caused by expiration of a survival time timer can be avoided, to improve service reliability.

FIG. 5 is a schematic flowchart of a data transmission method according to an embodiment of this application. This embodiment relates to a specific process of data transmission between an access network device and a terminal device. This embodiment may be performed by the access network device and the terminal device, or may be separately applied to a module, for example, a chip, in the access network device and the terminal device. The following provides description by using an example in which an access network device and a terminal device are used as execution bodies.

As shown in FIG. 5, the method may include S501 and S502. An execution sequence of the steps is not limited in this embodiment of this application.

S501: The terminal device reports a transmission mode of a first QoS flow to the access network device. Correspondingly, the access network device receives the transmission mode of the first QoS flow from the terminal device.

Optionally, a granularity at which the terminal device reports the transmission mode to the access network device may be a service granularity, a QoS flow granularity, a service flow granularity, or an application granularity. S501 is described by using "the terminal device reports the transmission mode of the first QoS flow to the access network device". Optionally, the transmission mode of the first QoS flow is preconfigured for the terminal device.

For example, a specific manner in which the terminal device reports the transmission mode of the first QoS flow to the access network device may include: The terminal device sends first information to the access network device. Correspondingly, the access network device receives the first information from the terminal device. The first information is used to report the transmission mode of the first QoS flow. Optionally, the first information may be carried on UE assistance information (UE Assistance Information). Optionally, the terminal device may report the transmission mode of the first QoS flow to the access network device by setting the first information to different values. Correspondingly, the access network device may determine the transmission mode of the first QoS flow based on the different values of the first information. Alternatively, the terminal device may report the transmission mode of the first QoS flow to the access network device by sending or not sending the first information. Correspondingly, the access network device may determine the transmission mode of the first QoS flow based on whether the first information is received. Alternatively, the terminal device may implicitly report the transmission mode of the first QoS flow to the access network device by sending a parameter. Correspondingly, the access network device may determine the transmission mode of the first QoS flow based on the parameter. For the parameter, refer to the description of indicating, by the SMF, a related parameter to the access network device in Manner 4 in S402.

S502: The access network device transmits data to the terminal device based on the transmission mode of the first QoS flow. For descriptions of S502, refer to S403.

Optionally, the embodiment shown in FIG. 5 may further include S500: The access network device sends a request message to the terminal device. The request message is used to request the transmission mode of the first QoS flow. Optionally, a granularity of the transmission mode requested by the request message may be a service granularity, a QoS flow granularity, a service flow granularity, or an application granularity.

The foregoing embodiment provides a data transmission method. The access network device may obtain a transmission mode of an IIoT service from the terminal device. When a data packet loss or a transmission failure occurs, the access network device and the terminal device may determine, based on the transmission mode of the service, whether reliability of unidirectional transmission needs to be improved or reliability of bidirectional transmission needs to be improved. For example, when the transmission mode is the acknowledged mode, when an uplink/downlink transmission failure is detected, the access network device and the terminal device need to perform uplink transmission and downlink transmission in a more robust transmission manner. Therefore, a service shutdown caused by expiration of a survival time timer can be avoided, to improve service reliability.

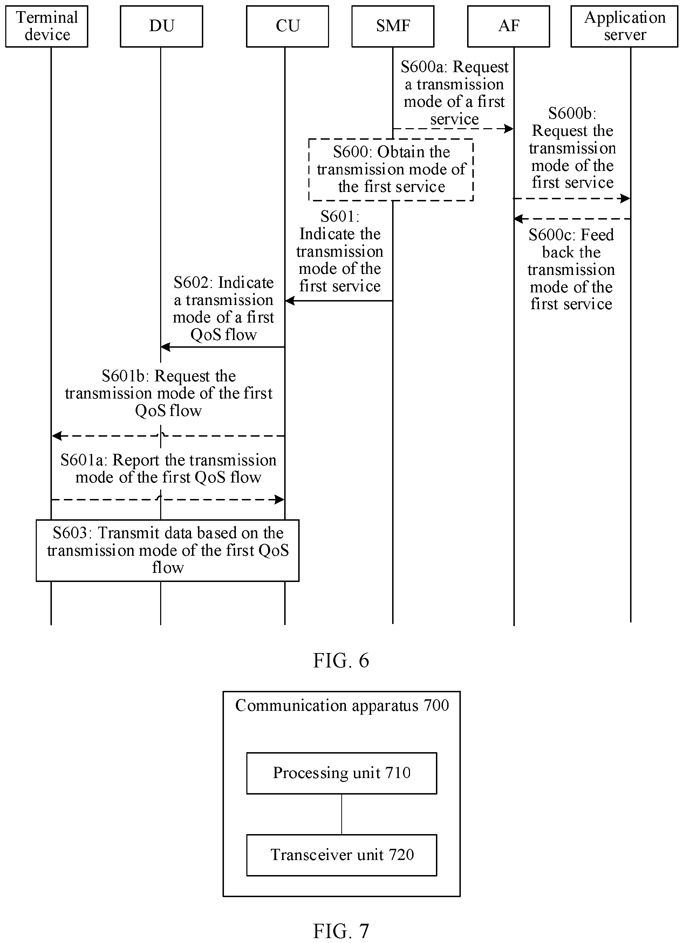

FIG. 6 is a schematic flowchart of a data transmission method according to an embodiment of this application. This embodiment relates to a specific process of performing data transmission between a first communication apparatus, a second communication apparatus, a first core network device, and a terminal device. This embodiment may be performed by the first communication apparatus, the second communication apparatus, the first core network device, and the terminal device, or may be separately applied to a module, for example, a chip, in the first communication apparatus, the second communication apparatus, the first core network device, and the terminal device. The following provides description by using an example in which the first communication apparatus, the second communication apparatus, the first core network device, and the terminal device are used as execution bodies.

In this embodiment of this application, the first communication apparatus may be a CU or a control plane CU (referred to as a CU-CP), and the second communication apparatus may be a DU or a user plane CU (referred to as a CU-UP). For example, when the first communication apparatus is a CU, the second communication apparatus may be a DU. When the first communication apparatus is a CU-CP, the second communication apparatus may be a CU-UP or a DU. In the embodiment shown in FIG. 6, the first communication apparatus is a CU, the second communication apparatus is a DU, and the first core network device is an SMF for description.

As shown in FIG. 6, the method may include S601, S602, and 603. S603 may be used as an independent embodiment. An execution sequence of the steps is not limited in this embodiment of this application.

S601: The CU obtains a transmission mode of a first QoS flow from the SMF. Correspondingly, the SMF indicates the transmission mode of the first QoS flow to the CU. The transmission mode of the first QoS flow is an acknowledged mode or an unacknowledged mode.

Optionally, "the CU obtains the transmission mode of the first QoS flow from the SMF" may be replaced with "the CU obtains a transmission mode of a first service from the SMF", "the CU obtains a transmission mode of a first service flow from the SMF", or "the CU obtains a transmission mode of a first application from the SMF". The first service flow belongs to the first service, and the first service belongs to the first application. That is, a granularity at which the SMF indicates the transmission mode to the CU may be a service granularity, a QoS flow granularity, a service flow granularity, or an application granularity. S601 is described as "the CU obtains the transmission mode of the first QoS flow from the SMF".

For example, for obtaining, by the CU, the transmission mode of the first QoS flow from the SMF, refer to Manner 1 to Manner 4 in S502. Only "access network device" in Manner 1 to Manner 4 needs to be replaced with "CU". Details are not described herein again.

S602: The CU indicates the transmission mode of the first QoS flow to the DU. Correspondingly, the DU obtains the transmission mode of the first QoS flow from the CU.

For example, a manner in which the CU indicates the transmission mode of the first QoS flow to the DU includes but is not limited to the following manners:
Manner 1: The CU sends third indication information to the DU. When the third indication information is a fifth value, the transmission mode of the first QoS flow is the unacknowledged mode; or when the third indication information is a sixth value, the transmission mode of the first QoS flow is the acknowledged mode.
Manner 2: When the CU sends third indication information to the DU, it indicates that the transmission mode of the first QoS flow is the unacknowledged mode; or when the CU does not send the third indication information to the DU, it indicates that the transmission mode of the first QoS flow is the acknowledged mode.
Manner 3: When the CU sends third indication information to the DU, it indicates that the transmission mode of the first QoS flow is the acknowledged mode; or when the CU does not send the third indication information to the DU, it indicates that the transmission mode of the first QoS flow is the unacknowledged mode.
Manner 4: The CU indicates the transmission mode of the first QoS flow to the DU in an implicit manner. That is, the CU does not directly indicate the transmission mode of the first QoS flow, but indicates another parameter or information. The DU may derive the transmission mode of the first QoS flow by using the indicated parameter or information. For a parameter indicated by the CU to the access network device, refer to Manner 4 in S502. Only "access network device" in Manner 4 needs to be replaced with "DU". Details are not described herein again.

Optionally, the CU may indicate the transmission mode of the first QoS flow to the DU by using an F1 interface message. That is, the third indication information in Manner 1 to Manner 3 and the parameter in Manner 4 may be carried in the F1 interface message.

Optionally, when the first communication apparatus is a CU-CP, and the second communication apparatus is a DU, the CU-CP may indicate the transmission mode of the first QoS flow to the DU by using an F1 interface message. That is, the third indication information in Manner 1 to Manner 3 and the parameter in Manner 4 may be carried in the F1 interface message.

Optionally, the F1 interface message may be a UE context setup request (UE context Setup Request) message, a UE context modification request (UE Context Modification Request) message, or a UE context modification confirm (UE Context Modification Confirm) message. This is not limited in this embodiment of this application.

Optionally, when the first communication apparatus is a CU-CP, and the second communication apparatus is a CU-UP, the CU-CP may indicate the transmission mode of the first QoS flow to the CU-UP by using an E1 interface message. That is, the third indication information in Manner 1 to Manner 3 and the parameter in Manner 4 may be carried in the E1 interface message. Optionally, the E1 interface message may be a bearer context setup request (Bearer Context Setup Request) message, a bearer context modification (Bearer Context Modification) message, or a bearer context modification confirm (Bearer Context Modification Confirm) message. This is not limited in this embodiment of this application.

S603: The CU and the DU perform data transmission with the terminal device based on the transmission mode of the first QoS flow. For a specific description of S603, refer to S403. The "access network device" in 403 is replaced with the "CU or DU".

Optionally, the embodiment shown in FIG. 6 may further include S600.

S600: The SMF obtains a transmission mode of the first service. For a specific description of S600, refer to S401.

Optionally, the embodiment shown in FIG. 6 may further include any one or more of S600a, S600b, and S600c.

S600a: The SMF sends a request message to the AF. Correspondingly, the AF receives the request message from the SMF. The request message is used to request the transmission mode of the first service. For a specific description of S600a, refer to S400.

S600b: The AF sends a request message to an application server. Correspondingly, the application server receives the request message from the AF. The request message is used to request the transmission mode of the first service.

S600c: The application server sends feedback information to the AF. Correspondingly, the AF receives the feedback information from the application server. The feedback information carries the transmission mode of the first service.

For specific descriptions of S600b and S600c, refer to S400a and S400b.

Optionally, S601 may alternatively be replaced with S601a.

S601a: The terminal device reports the transmission mode of the first QoS flow to the CU. Correspondingly, the access network device receives the transmission mode of the first QoS flow from the terminal device. The first QoS flow belongs to the first service.

Optionally, a granularity at which the terminal device reports the transmission mode to the CU may be a service granularity, a QoS flow granularity, a service flow granularity, or an application granularity. S601a is described by using "the terminal device reports the transmission mode of the first QoS flow to the CU". Optionally, the transmission mode of the first QoS flow is preconfigured for the terminal device.

Optionally, the embodiment shown in FIG. 6 may further include S601b.

S601b: The CU sends a request message to the terminal device. The request message is used to request the transmission mode of the first QoS flow. Optionally, a granularity of the transmission mode requested by the request message may be a service granularity, a QoS flow granularity, a service flow granularity, or an application granularity.

The foregoing embodiment provides a data transmission method. The CU may obtain a transmission mode of an IIoT service from a core network device such as an SMF or the terminal device. When a data packet loss or a transmission failure occurs, the CU, the DU, and the terminal device may determine, based on the transmission mode of the service, whether reliability of unidirectional transmission needs to be improved or reliability of bidirectional transmission needs to be improved. For example, when the transmission mode is the acknowledged mode, when an uplink/downlink transmission failure is detected, the CU, the DU, and the terminal device need to perform uplink transmission and downlink transmission in a more robust transmission manner. Therefore, a service shutdown caused by expiration of a survival time timer can be avoided, to improve service reliability.

Similarly, the foregoing solution may be further applied to another scenario. For example, in a handover scenario or a dual connectivity scenario in which a secondary access network device is configured, the first access network device may indicate the transmission mode of the first service/the first service flow/the first QoS flow/the first application to a second access network device by using an Xn interface message. For example, the first access network device may be a primary access network device in the DC scenario, and the second access network device may be a secondary access network device added in the DC scenario. For example, the first access network device may be a source access network device before handover, and the second access network device may be a target access network device. Optionally, the Xn interface message may be a handover request message, a secondary node addition request (S-Node Addition Request) message, a secondary node modification request (S-Node Modification Request) message, or a secondary node modification confirm (S-Node Modification Confirm) message. This is not limited in this embodiment of this application. Optionally, in addition to exchanging the transmission mode information, the Xn interface message may further exchange information such as configuration information and TSCAI of the terminal device.

In the foregoing manner, the second access network device may determine, based on a transmission mode of a service, how to improve reliability of subsequent transmission when a data packet loss occurs, to avoid a service shutdown caused by expiration of a survival time timer, to improve reliability of the service.

It should be noted that in specific implementation, some steps in FIG. 4, FIG. 5, and FIG. 6 may be selected for implementation, or a sequence of the steps in the figure may be adjusted for implementation. This is not limited in this application. It should be understood that performing some steps in the figure or adjusting a sequence of the steps for specific implementation shall fall within the protection scope of this application.

It may be understood that, to implement the functions in the foregoing embodiments, the CU and the DU may include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions. A person skilled in the art may use different methods to implement the described functions for each particular application, but it should not be considered that the implementation goes beyond the scope of this application.

FIG. 7 to FIG. 9 are schematic diagrams of structures of possible communication apparatuses according to an embodiment of this application. These communication apparatuses may be configured to implement functions of the DU or the CU in the foregoing method embodiments, and therefore can also implement beneficial effects of the foregoing method embodiments. In embodiments of this application, the communication apparatus may be the DU in any one of the foregoing embodiments, or may be a chip disposed in the DU, or may be the CU in any one of the foregoing embodiments, or may be a chip disposed in the CU.

As shown in FIG. 7, a communication apparatus 700 includes a processing unit 710 and a transceiver unit 720.

The communication apparatus 700 is configured to implement a function of the first core network device in the method embodiment shown in FIG. 4, or the communication apparatus 700 may include a module configured to implement any function or operation of the first core network device in the method embodiment shown in FIG. 4. The module may be all or partially implemented by using software, hardware, firmware, or any combination thereof. The communication apparatus 700 is configured to implement a function of the access network device in the method embodiment shown in FIG. 4, or the communication apparatus 700 may include a module configured to implement any function or operation of the access network device in the method embodiment shown in FIG. 4. The module may be all or partially implemented by using software, hardware, firmware, or any combination thereof.

The communication apparatus 700 is configured to implement a function of the access network device in the method embodiment shown in FIG. 5, or the communication apparatus 700 may include a module configured to implement any function or operation of the access network device in the method embodiment shown in FIG. 5. The module may be all or partially implemented by using software, hardware, firmware, or any combination thereof. The communication apparatus 700 is configured to implement a function of the terminal device in the method embodiment shown in FIG. 5, or the communication apparatus 700 may include a module configured to implement any function or operation of the terminal device in the method embodiment shown in FIG. 5. The module may be all or partially implemented by using software, hardware, firmware, or any combination thereof.

The communication apparatus 700 is configured to implement a function of the first communication apparatus in the method embodiment shown in FIG. 6, or the communication apparatus 700 may include a module configured to implement any function or operation of the first communication apparatus in the method embodiment shown in FIG. 6. The module may be all or partially implemented by using software, hardware, firmware, or any combination thereof. The communication apparatus 700 is configured to implement a function of the second communication apparatus in the method embodiment shown in FIG. 6, or the communication apparatus 700 may include a module configured to implement any function or operation of the second communication apparatus in the method embodiment shown in FIG. 5. The module may be all or partially implemented by using software, hardware, firmware, or any combination thereof.

When the communication apparatus 700 is configured to implement a function of the first core network device in the method embodiment shown in FIG. 4, the transceiver unit 720 is configured to obtain a transmission mode of a first service. The transmission mode of the first service is an acknowledged mode or an unacknowledged mode. The transceiver unit 720 is further configured to indicate a transmission mode of a first QoS flow to an access network device. The first QoS flow belongs to the first service.

In a possible design, the transceiver unit 720 is further configured to send a request message to a second core network device. The request message is used to request the transmission mode of the first service.

In a possible design, the transceiver unit 720 is configured to receive first indication information from the second core network device, and the processing unit 710 is configured to determine the transmission mode of the first service based on the first indication information.

In a possible design, when the first indication information is a first value, the processing unit 710 determines that the transmission mode of the first service is the acknowledged mode; or when the first indication information is a second value, the processing unit 710 determines that the transmission mode of the first service is the unacknowledged mode.

In a possible design, when the transceiver unit 720 receives first indication information from the second core network device, the processing unit 710 determines that the transmission mode of the first service is the acknowledged mode, or when the transceiver unit 720 does not receive the first indication information from the second core network device, the processing unit 710 determines that the transmission mode of the first service is the unacknowledged mode. When the transceiver unit 720 receives the first indication information from the second core network device, the processing unit 710 determines that the transmission mode of the first service is the unacknowledged mode, or when the transceiver unit 720 does not receive the first indication information from the second core network device, the processing unit 710 determines that the transmission mode of the first service is the acknowledged mode.

In a possible design, the transceiver unit 720 is further configured to send second indication information to the access network device. When the second indication information indicates that the transmission mode of the first QoS flow is the unacknowledged mode, the second indication information is a third value; or when the second indication information indicates that the transmission mode of the first QoS flow is the acknowledged mode, the second indication information is a fourth value.

In a possible design, when the transmission mode of the first QoS flow is the unacknowledged mode, the transceiver unit 720 is further configured to send second indication information to the access network device. Alternatively, when the transmission mode of the first QoS flow is the acknowledged mode, the transceiver unit 720 is further configured to send the second indication information to the access network device.

In a possible design, the transceiver unit 720 is further configured to send at least one of the following parameters to the access network device:
a first time difference, indicating a time difference between arrival of a first data packet at the access network device and arrival of a second data packet at the access network device;
a first time range, indicating that the second data packet arrives at the access network device within the first time range after the first data packet arrives at the access network device;
a first parameter, indicating a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

When the communication apparatus 700 is configured to implement a function of the access network device in the method embodiment shown in FIG. 4, the transceiver unit 720 is configured to obtain a transmission mode of a first QoS flow from a first core network device. The transmission mode of the first QoS flow is an acknowledged mode or an unacknowledged mode. The transceiver unit 720 is further configured to transmit data to a terminal device based on the transmission mode of the first QoS flow.

In a possible design, the transceiver unit 720 is configured to receive second indication information from the first core network device, and the processing unit 710 is configured to determine the transmission mode of the first QoS flow based on the second indication information.

In a possible design, when the second indication information is a third value, the processing unit 710 determines that the transmission mode of the first QoS flow is the unacknowledged mode; or when the second indication information is a fourth value, the processing unit 710 determines that the transmission mode of the first QoS flow is the acknowledged mode.

In a possible design, when the transceiver unit 720 receives second indication information from the first core network device, the processing unit 710 determines that the transmission mode of the first QoS flow is the unacknowledged mode, or when the transceiver unit 720 does not receive the second indication information from the first core network device, the processing unit 710 determines that the transmission mode of the first QoS flow is the acknowledged mode. Alternatively, when the transceiver unit 720 receives the second indication information from the first core network device, the processing unit 710 determines that the transmission mode of the first QoS flow is the acknowledged mode, or when the transceiver unit 720 does not receive the second indication information from the first core network device, the processing unit 710 determines that the transmission mode of the first QoS flow is the unacknowledged mode.

In a possible design, the transceiver unit 720 is configured to receive at least one parameter from the first core network device, and the processing unit 710 determines the transmission mode of the first QoS flow based on the at least one parameter. The at least one parameter includes:
a first time difference, indicating a time difference between arrival of a first data packet at the access network device and arrival of a second data packet at the access network device;
a first time range, indicating that the second data packet arrives at the access network device within the first time range after the first data packet arrives at the access network device;
a first parameter, indicating a maximum value of a sum of a transmission latency of the first data packet and a transmission latency of the second data packet;
survival time of the first QoS flow in an uplink direction and survival time of the first QoS flow in a downlink direction, where the survival time of the first QoS flow in the uplink direction is the same as or different from the survival time of the first QoS flow in the downlink direction; and
slice information corresponding to the first QoS flow.

The first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

When the communication apparatus 700 is configured to implement a function of the access network device in the method embodiment shown in FIG. 5, the transceiver unit 720 is configured to obtain a transmission mode of a first QoS flow from a terminal device. The transmission mode of the first QoS flow is an acknowledged mode or an unacknowledged mode. The transceiver unit 720 is further configured to transmit data to the terminal device based on the transmission mode of the first QoS flow.

When the communication apparatus 700 is configured to implement a function of the terminal device in the method embodiment shown in FIG. 5, the transceiver unit 720 is configured to report a transmission mode of a first QoS flow to an access network device. The transmission mode of the first QoS flow is an acknowledged mode or an unacknowledged mode. The transceiver unit 720 is further configured to transmit data to the access network device based on the transmission mode of the first QoS flow.

When the communication apparatus 700 is configured to implement a function of the first communication apparatus in the method embodiment shown in FIG. 6, the transceiver unit 720 is configured to obtain a transmission mode of a first QoS flow from a first core network device. The transmission mode of the first QoS flow is an acknowledged mode or an unacknowledged mode. The transceiver unit 720 is further configured to indicate the transmission mode of the first QoS flow to a second communication apparatus. The first communication apparatus may be a CU or a CU-CP, and the second communication apparatus may be a DU or a CU-UP.

When the communication apparatus 700 is configured to implement a function of the second communication apparatus in the method embodiment shown in FIG. 6, the transceiver unit 720 is configured to obtain a transmission mode of a first QoS flow from a first communication apparatus. The transmission mode of the first QoS flow is an acknowledged mode or an unacknowledged mode. The transceiver unit 720 is further configured to transmit data to the terminal device based on the transmission mode of the first QoS flow.

For more detailed descriptions of the processing unit 710 and the transceiver unit 720, directly refer to related descriptions in the method embodiment shown in FIG. 4, FIG. 5, or FIG. 6. Details are not described herein again.

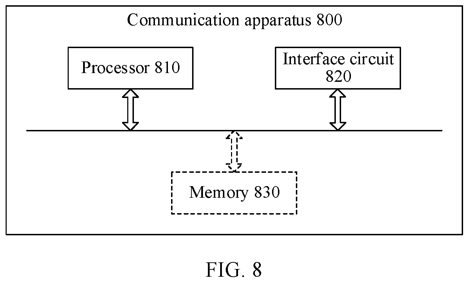

FIG. 8 is a schematic diagram of a structure of another possible communication apparatus according to an embodiment of this application. As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method shown in FIG. 4, FIG. 5, or FIG. 6, the processor 810 is configured to implement a function of the processing unit 710, and the interface circuit 820 is configured to implement a function of the transceiver unit 720.

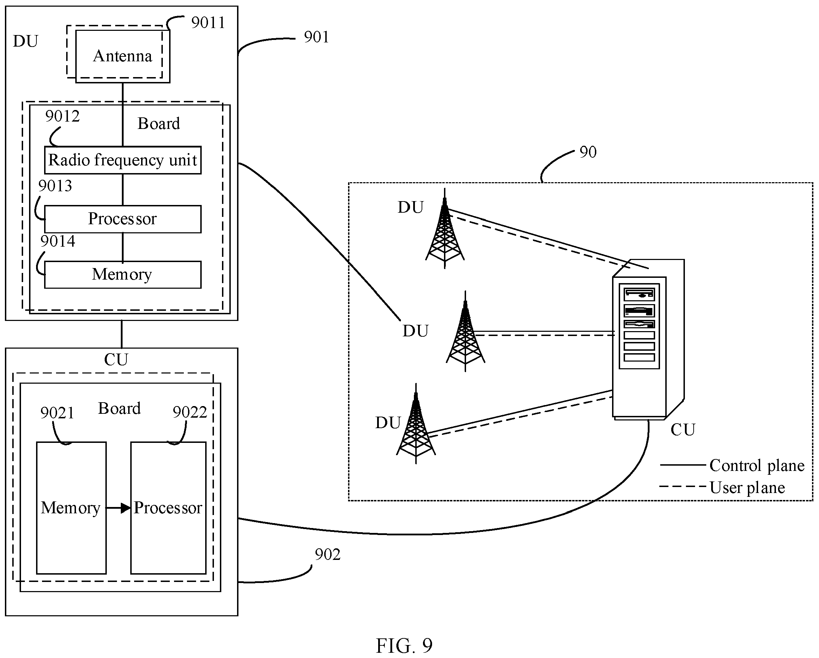

FIG. 9 is a schematic diagram of a structure of an access network device according to an embodiment of this application. The access network device 90 includes one or more DUs 901 and one or more CUs 902. The DU 901 may be configured to perform a function of the DU in the foregoing method embodiments. The CU 902 may be configured to perform a function of the CU in the foregoing method embodiments.

The DU 901 may include at least one antenna 9011, at least one radio frequency unit 9012, at least one processor 9013, and at least one memory 9014. The DU 901 is mainly configured to receive and send a radio frequency signal, perform conversion between a radio frequency signal and a baseband signal, and perform partial baseband processing. The CU 902 may include at least one processor 9022 and at least one memory 9021. The CU 902 and the DU 901 may communicate with each other through an Fl interface (for example, F1-C or F1-U). The CU 902 is mainly configured to perform baseband processing and the like. The DU 901 and the CU 902 may be physically disposed together, or may be physically disposed separately. In this embodiment of this application, an example in which the DU 901 and the CU 902 are physically disposed separately is used for description.

In addition, optionally, the access network device 90 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. To be specific, a memory and a processor may be separately disposed on each board, or a plurality of boards may share a same memory and a same processor. In addition, a necessary circuit may be further disposed on each board. The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. To be specific, a memory and a processor may be separately disposed on each board, or a plurality of boards may share a same memory and a same processor. In addition, a necessary circuit may be further disposed on each board.

The DU shown in FIG. 9 can implement processes related to the DU in the method embodiment shown in FIG. 4, FIG. 5, or FIG. 6. Operations and/or functions of the modules in the DU shown in FIG. 9 are separately used to implement corresponding procedures in the foregoing method embodiments. For details, refer to the descriptions in the foregoing method embodiment. To avoid repetition, detailed descriptions are properly omitted herein.

The CU shown in FIG. 9 can implement processes related to the CU in the method embodiment shown in FIG. 4, FIG. 5, or FIG. 6. Operations and/or functions of the modules in the CU shown in FIG. 9 are separately used to implement corresponding procedures in the foregoing method embodiments. For details, refer to the descriptions in the foregoing method embodiment. To avoid repetition, detailed descriptions are properly omitted herein.

It may be understood that the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

In this embodiment of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may exist in the network device or the terminal device as discrete components.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape; or may be an optical medium, for example, a DVD; or may be a semiconductor medium, for example, a solid state disk (solid state disk, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that numerical symbols involved in the embodiments of this application are differentiated merely for ease of description, but are not used to limit the scope of the embodiments of this application. The sequence numbers of the foregoing processes do not mean execution sequences, and the execution sequences of the processes should be determined based on functions and internal logic of the processes.

## Claims

1. A data transmission method, wherein the method is applied to a first core network device or a chip in the first core network device, and the method comprises:
obtaining a transmission mode of a first service, wherein the transmission mode of the first service is an acknowledged mode or an unacknowledged mode; and
indicating a transmission mode of a first QoS flow to an access network device, wherein the first QoS flow belongs to the first service.

2. The method according to claim 1, wherein the method further comprises:
sending a request message to a second core network device, wherein the request message is used to request the transmission mode of the first service.

3. The method according to claim 1 or 2, wherein the obtaining a transmission mode of a first service specifically comprises:
receiving first indication information from the second core network device, wherein when the first indication information is a first value, the transmission mode of the first service is the acknowledged mode; or when the first indication information is a second value, the transmission mode of the first service is the unacknowledged mode.

4. The method according to claim 1 or 2, wherein the obtaining a transmission mode of a first service specifically comprises:
when first indication information is received from the second core network device, determining that the transmission mode of the first service is the acknowledged mode, or when the first indication information is not received from the second core network device, determining that the transmission mode of the first service is the unacknowledged mode; or when the first indication information is received from the second core network device, determining that the transmission mode of the first service is the unacknowledged mode, or when the first indication information is not received from the second core network device, determining that the transmission mode of the first service is the acknowledged mode.

5. The method according to any one of claims 1 to 4, wherein the indicating a transmission mode of a first QoS flow to an access network device specifically comprises:
sending second indication information to the access network device, wherein when the second indication information indicates that the transmission mode of the first QoS flow is the unacknowledged mode, the second indication information is a third value; or when the second indication information indicates that the transmission mode of the first QoS flow is the acknowledged mode, the second indication information is a fourth value.

6. The method according to any one of claims 1 to 4, wherein the indicating a transmission mode of a first QoS flow to an access network device specifically comprises:
when the transmission mode of the first QoS flow is the unacknowledged mode, sending second indication information to the access network device; or when the transmission mode of the first QoS flow is the acknowledged mode, sending the second indication information to the access network device.

7. The method according to any one of claims 1 to 4, wherein the transmission mode of the first QoS flow is indicated by sending at least one of the following parameters to the access network device:
a first time difference, wherein the first time difference indicates a time difference between arrival of a first data packet at the access network device and arrival of a second data packet at the access network device;
a first time range, wherein the first time range indicates that the second data packet arrives at the access network device within the first time range after the first data packet arrives at the access network device;
a first parameter, wherein the first parameter indicates a maximum value of a sum of a transmission latency of the first data packet and a transmission latency of the second data packet;
survival time of the first QoS flow in an uplink direction and survival time of the first QoS flow in a downlink direction, wherein the survival time of the first QoS flow in the uplink direction is the same as the survival time of the first QoS flow in the downlink direction; and
slice information corresponding to the first QoS flow, wherein
the first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

8. A data transmission method, wherein the method is applied to an access network device or a chip in the access network device, and the method comprises:
obtaining a transmission mode of a first QoS flow from a first core network device, wherein the transmission mode of the first QoS flow is an acknowledged mode or an unacknowledged mode; and
transmitting data to a terminal device based on the transmission mode of the first QoS flow.

9. The method according to claim 8, wherein the obtaining a transmission mode of a first QoS flow from a first core network device specifically comprises:
receiving second indication information from the first core network device, wherein when the second indication information is a third value, the transmission mode of the first QoS flow is the unacknowledged mode; or when the second indication information is a fourth value, the transmission mode of the first QoS flow is the acknowledged mode.

10. The method according to claim 8, wherein the obtaining a transmission mode of a first QoS flow from a first core network device specifically comprises:
when second indication information is received from the first core network device, the transmission mode of the first QoS flow is the unacknowledged mode, or when the second indication information is not received from the first core network device, the transmission mode of the first QoS flow is the acknowledged mode; or when the second indication information is received from the first core network device, the transmission mode of the first QoS flow is the acknowledged mode, or when the second indication information is not received from the first core network device, the transmission mode of the first QoS flow is the unacknowledged mode.

11. The method according to claim 8, wherein the obtaining a transmission mode of a first QoS flow from a first core network device specifically comprises:
receiving at least one parameter from the first core network device, and determining the transmission mode of the first QoS flow based on the at least one parameter, wherein the at least one parameter comprises:
a first time difference, wherein the first time difference indicates a time difference between arrival of a first data packet at the access network device and arrival of a second data packet at the access network device;
a first time range, wherein the first time range indicates that the second data packet arrives at the access network device within the first time range after the first data packet arrives at the access network device;
a first parameter, wherein the first parameter indicates a maximum value of a sum of a transmission latency of the first data packet and a transmission latency of the second data packet;
survival time of the first QoS flow in an uplink direction and survival time of the first QoS flow in a downlink direction, wherein the survival time of the first QoS flow in the uplink direction is the same as the survival time of the first QoS flow in the downlink direction; and
slice information corresponding to the first QoS flow, wherein
the first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

12. A data transmission method, wherein the method is applied to a first communication apparatus or a chip in the first communication apparatus, and the method comprises:
obtaining a transmission mode of a first QoS flow from a first core network device, wherein the transmission mode of the first QoS flow is an acknowledged mode or an unacknowledged mode; and
indicating the transmission mode of the first QoS flow to a second communication apparatus.

13. The method according to claim 12, wherein the obtaining a transmission mode of a first QoS flow from a first core network device specifically comprises:
receiving second indication information from the first core network device, wherein when the second indication information is a third value, the transmission mode of the first QoS flow is the unacknowledged mode; or when the second indication information is a fourth value, the transmission mode of the first QoS flow is the acknowledged mode.

14. The method according to claim 12, wherein the obtaining a transmission mode of a first QoS flow from a first core network device specifically comprises:
when second indication information is received from the first core network device, the transmission mode of the first QoS flow is the unacknowledged mode, or when the second indication information is not received from the first core network device, the transmission mode of the first QoS flow is the acknowledged mode; or when the second indication information is received from the first core network device, the transmission mode of the first QoS flow is the acknowledged mode, or when the second indication information is not received from the first core network device, the transmission mode of the first QoS flow is the unacknowledged mode.

15. The method according to any one of claims 12 to 14, wherein the indicating the transmission mode of the first QoS flow to a second communication apparatus specifically comprises:
sending third indication information to the second communication apparatus, wherein when the third indication information indicates that the transmission mode of the first QoS flow is the unacknowledged mode, the third indication information is a fifth value; or when the third indication information indicates that the transmission mode of the first QoS flow is the acknowledged mode, the third indication information is a sixth value.

16. The method according to any one of claims 12 to 14, wherein the indicating the transmission mode of the first QoS flow to a second communication apparatus specifically comprises:
when the transmission mode of the first QoS flow is the unacknowledged mode, sending third indication information to the second communication apparatus; or when the transmission mode of the first QoS flow is the acknowledged mode, sending the third indication information to the second communication apparatus.

17. The method according to any one of claims 12 to 14, wherein at least one of the following parameters is sent to the second communication apparatus, to indicate that the transmission mode of the first QoS flow is the acknowledged mode:
a first time difference, wherein the first time difference indicates a time difference between arrival of a first data packet at the second communication apparatus and arrival of a second data packet at the second communication apparatus;
a first time range, wherein the first time range indicates that the second data packet arrives at the second communication apparatus within the first time range after the first data packet arrives at the second communication apparatus;
a first parameter, wherein the first parameter indicates a maximum value of a sum of a transmission latency of the first data packet and a transmission latency of the second data packet;
survival time of the first QoS flow in an uplink direction and survival time of the first QoS flow in a downlink direction, wherein the survival time of the first QoS flow in the uplink direction is the same as the survival time of the first QoS flow in the downlink direction; and
slice information corresponding to the first QoS flow, wherein
the first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

18. A data transmission method, wherein the method is applied to a second communication apparatus or a chip in the second communication apparatus, and the method comprises:
obtaining a transmission mode of a first QoS flow from a first communication apparatus, wherein the transmission mode of the first QoS flow is an acknowledged mode or an unacknowledged mode; and
transmitting data to a terminal device based on the transmission mode of the first QoS flow.

19. The method according to claim 18, wherein the obtaining a transmission mode of a first QoS flow from a first communication apparatus specifically comprises:
receiving third indication information from the first communication apparatus, wherein when the third indication information is a fifth value, the transmission mode of the first QoS flow is the unacknowledged mode; or when the third indication information is a sixth value, the transmission mode of the first QoS flow is the acknowledged mode.

20. The method according to claim 18 or 19, wherein the obtaining a transmission mode of a first QoS flow from a first communication apparatus specifically comprises:
when the third indication information is received from the first communication apparatus, the transmission mode of the first QoS flow is the unacknowledged mode, or when the third indication information is not received from the first communication apparatus, the transmission mode of the first QoS flow is the acknowledged mode; or when the third indication information is received from the first communication apparatus, the transmission mode of the first QoS flow is the acknowledged mode, or when the third indication information is not received from the first communication apparatus, the transmission mode of the first QoS flow is the unacknowledged mode.

21. The method according to claim 18 or 19, wherein the obtaining a transmission mode of a first QoS flow from a first communication apparatus specifically comprises:
receiving at least one parameter from the first communication apparatus, and determining the transmission mode of the first QoS flow based on the at least one parameter, wherein the at least one parameter comprises:
a first time difference, wherein the first time difference indicates a time difference between arrival of a first data packet at the second communication apparatus and arrival of a second data packet at the second communication apparatus;
a first time range, wherein the first time range indicates that the second data packet arrives at the second communication apparatus within the first time range after the first data packet arrives at the second communication apparatus;
a first parameter, wherein the first parameter indicates a maximum value of a sum of a transmission latency of the first data packet and a transmission latency of the second data packet;
survival time of the first QoS flow in an uplink direction and survival time of the first QoS flow in a downlink direction, wherein the survival time of the first QoS flow in the uplink direction is the same as the survival time of the first QoS flow in the downlink direction; and
slice information corresponding to the first QoS flow, wherein
the first data packet is any uplink data packet of the first QoS flow, and the second data packet is any downlink data packet of the first QoS flow; or the first data packet is any downlink data packet of the first QoS flow, and the second data packet is any uplink data packet of the first QoS flow.

22. A communication apparatus, comprising a module configured to perform the method according to any one of claims 1 to 7.

23. A communication apparatus, comprising a module configured to perform the method according to any one of claims 8 to 11, 12 to 17, or 18 to 21.

24. A communication apparatus, comprising a processor and a memory, wherein the processor is coupled to the memory, and the processor is configured to control the apparatus to implement the method according to any one of claims 1 to 7.

25. A communication apparatus, comprising a processor and a memory, wherein the processor is coupled to the memory, and the processor is configured to control the apparatus to implement the method according to any one of claims 8 to 11, 12 to 17, or 18 to 21.

26. A communication apparatus, comprising a processor and an interface circuit, wherein the interface circuit is configured to: receive a signal from a communication apparatus other than the communication apparatus and transmit the signal to the processor, or send a signal from the processor to the communication apparatus other than the communication apparatus; and the processor is configured to implement the method according to any one of claims 1 to 7 by using a logic circuit or executing code instructions.

27. A communication apparatus, comprising a processor and an interface circuit, wherein the interface circuit is configured to: receive a signal from a communication apparatus other than the communication apparatus and transmit the signal to the processor, or send a signal from the processor to the communication apparatus other than the communication apparatus; and the processor is configured to implement the method according to any one of claims 8 to 11, 12 to 17, or 18 to 21 by using a logic circuit or executing code instructions.

28. A computer-readable storage medium, wherein the storage medium stores a computer program or instructions, and when the computer program or instructions are executed by the communication apparatus, the method according to any one of claims 1 to 7, 8 to 11, 12 to 17, or 18 to 21 is implemented.

29. A communication system, comprising the communication apparatus according to any one of claims 22, 24, and 26 and the communication apparatus according to any one of claims 23, 25, and 27.

30. A computer program product, wherein the computer program product comprises instructions, and when the instructions are run by a computer, the method according to any one of claims 1 to 7, 8 to 11, 12 to 17, or 18 to 21 is implemented.
